(19)

Europäisches
Patentamt

European
Patent Office

Office européen
des brevets

(11) **EP 4 546 892 A1**

(12) **EUROPEAN PATENT APPLICATION**
published in accordance with Art. 153(4) EPC

(43) Date of publication:
**30.04.2025 Bulletin 2025/18**

(21) Application number: **23845194.2**

(22) Date of filing: **28.06.2023**

(51) International Patent Classification (IPC):
***H04W 52/18*** (2009.01)

(52) Cooperative Patent Classification (CPC):
**H04B 7/155; H04W 52/18**

(86) International application number:
**PCT/CN2023/103489**

(87) International publication number:
**WO 2024/021981 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 CN 202210910193**

(71) Applicant: **Huawei Technologies Co., Ltd.
Shenzhen, Guangdong 518129 (CN)**

(72) Inventors:
• **YAN, Mao
Shenzhen, Guangdong 518129 (CN)**
• **LIU, Fengwei
Shenzhen, Guangdong 518129 (CN)**
• **SONG, Xinghua
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57) This application provides a communication method and an apparatus. The method includes: A relay device determines multiple pieces of measurement information based on multiple first signals, where each of the multiple pieces of measurement information corresponds to one first signal. The relay device sends the multiple pieces of measurement information to a first network device, and receives forwarding power information from the first network device, where the forwarding power information is determined based on the multiple pieces of measurement information, and the forwarding power information is used by the relay device to forward a signal from a network device or a terminal device. According to the foregoing method, the relay device can determine the forwarding power information based on the one or more pieces of measurement information, to forward the signal from the network device or the terminal device based on the forwarding power information, so that signal coverage is improved.

FIG. 11

EP 4 546 892 A1

**Description**

CROSS-REFERENCE TO RELATED APPLICATIONS

This application claims priority to Chinese Patent Application No. 202210910193.9, filed with the China National Intellectual Property Administration on July 29, 2022 and entitled "COMMUNICATION METHOD AND APPARATUS", which is incorporated herein by reference in its entirety.

TECHNICAL FIELD

This application relates to the field of communication technologies, and in particular, to a communication method and an apparatus.

BACKGROUND

With evolution of a mobile communication network, to reduce a path loss between a base station and a terminal device, in an implementation, it is proposed that a relay device be used to assist communication between the base station and the terminal device. The relay device has two antenna panels, one for communication with the base station (referred to as a backhaul side), and the other antenna panel for communication with the terminal device (referred to as an access side). Generally, only one antenna is configured to receive signals, and the other antenna forwards the signals after the received signals are amplified.

In an existing system, only direct management between a base station and a terminal device is considered, while for the addition of a relay device, management for an amplification gain (or a forwarding power), connectivity, and the like of the relay device is not considered. Therefore, in the case of existence of a relay device in a network, how to determine power control information to enable amplification and forwarding by the relay device is an urgent problem to be resolved.

SUMMARY

This application provides a communication method and an apparatus, to resolve a problem of how to determine power control information to enable amplification and forwarding by a relay device in the case of existence of the relay device in a network.

According to a first aspect, this application provides a communication method. The method includes: A relay device determines multiple pieces of measurement information based on multiple first signals, where each of the multiple pieces of measurement information corresponds to one first signal; and the relay device sends the multiple pieces of measurement information to a first network device, and receives forwarding power information from the first network device, where the forwarding power information is determined based on one or more pieces of measurement information, and the forwarding power information is used by the relay device to forward a signal from a network device or a terminal device.

According to the foregoing method, the relay device can determine the forwarding power information based on the one or more pieces of measurement information, to forward the signal from the network device or the terminal device based on the forwarding power information, so that signal coverage is improved.

In an implementation, the multiple first signals are from at least one network device, and each network device sends at least one first signal. The first network device is one of the at least one network device.

In an implementation, when the multiple first signals are from multiple network devices, the multiple first signals may be simultaneously sent by the multiple network devices, or may be sent by the multiple network devices in a time division manner.

In an implementation, the multiple first signals are simultaneously scheduled by at least one network device.

In an implementation, frequency division multiplexing is used between the multiple first signals.

In an implementation, spatial division multiplexing is used between the multiple first signals.

In an implementation, intra-frequency multiplexing is used between the multiple first signals. To be specific, two signals are located at a same frequency, or parts of frequency locations of two signals overlap, or frequency locations of two signals may be the same.

In an implementation, the network device is a first network device or a second network device, or may be any network device other than the first network device or the second network device.

In an implementation, the method further includes: The relay device receives a second signal from the first network device, and forwards the second signal to a terminal device based on the forwarding power information, where there is an association relationship between the forwarding power information and at least one of the following: a transmission direction used by the relay device to receive the second signal, a transmission direction used by the relay device to forward the second signal, or a transmission direction used by the first network device to send the second signal.

According to the foregoing method, because the forwarding power information is associated with at least one of the foregoing items, when the relay device forwards a signal, the forwarding power information used by the relay device can be closer to an actually needed forwarding power information, so that forwarding efficiency is improved.

In an implementation, for a specific manner of determining the forwarding power information, refer to a method for determining first forwarding power information or second forwarding power information in embodiments of this application.

In an implementation, the second network device is one of the at least one network device, and the method further includes: The relay device receives a third signal from the second network device, and forwards the third signal to a terminal device based on the forwarding power information, where there is an association relationship between the forwarding power information and at least one of the following:

the transmission direction used by the relay device to receive the second signal; the transmission direction used by the relay device to forward the second signal; the transmission direction used by the first network device to send the second signal; a transmission direction used by the relay device to receive the third signal; a transmission direction used by the relay device to forward the third signal; or a transmission direction used by the second network device to send the third signal.

According to the foregoing method, because the forwarding power information is associated with at least one of the foregoing items, when the relay device forwards a signal in a multi-site mode, the forwarding power information that is more accurate can be used, so that forwarding efficiency is improved.

In an implementation, for each of the multiple first signals, measurement information corresponding to the first signal is a receive power of the first signal; and an $i^{th}$ first signal in the multiple first signals corresponds to the forwarding power information, and the forwarding power information satisfies any one of the following forms:

$$P_{Txi} = P_{Rxi} + Gi;$$

$$P_{Txi} = P_{Rxi} + Gi + 10\,log_{10}\,W;$$

or

$$P_{Txi} = P_{Rxi} + Gi + 10\,log_{10}\,W + 10\,log_{10}\,Por,$$

where

$P_{Txi}$ represents a preconfigured forwarding power of the $i^{th}$ first signal, $P_{Rxi}$ represents a receive power of the $i^{th}$ first signal, Gi represents the forwarding power information corresponding to the $i^{th}$ first signal, W represents a bandwidth corresponding to the $i^{th}$ first signal, and Por represents a quantity of ports corresponding to the $i^{th}$ first signal.

In an implementation, for each of the multiple first signals, measurement information corresponding to the first signal is a path loss of the first signal; and an $i^{th}$ first signal in the multiple first signals corresponds to the forwarding power information, and the forwarding power information satisfies the following form: $Gi = P_{0i} + PLi - P_{Rxi}$, where

$P_{0i}$ represents a preconfigured target receive power of the $i^{th}$ first signal, $P_{Rxi}$ represents a receive power of the $i^{th}$ first signal, Gi represents the forwarding power information corresponding to the $i^{th}$ first signal, and PLi represents a path loss of the $i^{th}$ first signal.

In an implementation, the method further includes: The relay device receives first information from the first network device, where the first information indicates a power offset value; and that the relay device forwards the second signal to a terminal device based on the forwarding power information includes:

The relay device forwards the second signal to the terminal device based on the forwarding power information and the power offset value.

According to the foregoing method, the power offset value is configured for the forwarding power information, so that the forwarding power information determined based on the measurement information can be adjusted, and forwarding efficiency is improved.

According to a second aspect, this application provides a communication method. The method includes: A first network device receives multiple pieces of measurement information from a relay device, where each of the multiple pieces of measurement information corresponds to one of multiple first signals; the first network device determines forwarding power information based on the multiple pieces of measurement information, where the forwarding power information is used by the relay device to forward a signal from a network device or a terminal device; and the first network device sends the forwarding power information to the relay device.

In an implementation, for each of the multiple first signals, measurement information corresponding to the first signal is a receive power of the first signal; and an $i^{th}$ first signal in the multiple first signals corresponds to the forwarding power information, and the forwarding power information satisfies any one of the following forms: $P_{Txi} = P_{Rxi} + Gi$;

$$P_{Txi} = P_{Rxi} + Gi + 10 \log_{10} W;$$

or

$$P_{Txi} = P_{Rxi} + Gi + 10 \log_{10} W + 10 \log_{10} Por,$$

where

$P_{Txi}$ represents a preconfigured forwarding power of the $i$th first signal, $P_{Rxi}$ represents a receive power of the $i$th first signal, Gi represents the forwarding power information corresponding to the $i$th first signal, W represents a bandwidth corresponding to the $i$th first signal, and Por represents a quantity of ports corresponding to the $i$th first signal.

In an implementation, for each of the multiple first signals, measurement information corresponding to the first signal is a path loss of the first signal; and an $i$th first signal in the multiple first signals corresponds to the forwarding power information, and the forwarding power information satisfies the following form: $Gi = P_{0i} + PLi - P_{Rxi}$, where

$P_{0i}$ represents a preconfigured target receive power of the $i$th first signal, $P_{Rxi}$ represents a receive power of the $i$th first signal, Gi represents the forwarding power information corresponding to the $i$th first signal, and PLi represents a path loss of the $i$th first signal.

In an implementation, the method further includes: The first network device sends first information to the relay device, where the first information indicates a power offset value corresponding to the forwarding power information.

According to a third aspect, this application provides a communication method. The method includes: A relay device determines multiple pieces of measurement information based on multiple first signals, where each of the multiple pieces of measurement information corresponds to one of the multiple first signals, and one of the multiple first signals is from one of at least one network device; and the relay device determines forwarding power information based on the multiple pieces of measurement information, where the forwarding power information is determined based on one or more pieces of measurement information, and the forwarding power information is used by the relay device to forward a signal from a network device or a terminal device.

In an implementation, the method further includes: The relay device receives a second signal from the network device, and forwards the second signal to a terminal device based on the forwarding power information.

In an implementation, there is an association relationship between the forwarding power information and at least one of the following: a transmission direction used by the relay device to receive the second signal, a transmission direction used by the relay device to forward the second signal, or a transmission direction used by the first network device to send the second signal.

In an implementation, the method further includes: The relay device receives first information from the network device, where the first information indicates a power offset value; and the forwarding the second signal to a terminal device based on the forwarding power information includes: The relay device forwards the second signal to the terminal device based on the forwarding power information and the power offset value.

In an implementation, for each of the multiple first signals, measurement information corresponding to the first signal is a receive power of the first signal; and an $i$th first signal in the multiple first signals corresponds to the forwarding power information, and the forwarding power information satisfies any one of the following forms: $P_{Txi} = P_{Rxi} + Gi$;

$$P_{Txi} = P_{Rxi} + Gi + 10 \log_{10} W;$$

or

$$P_{Txi} = P_{Rxi} + Gi + 10 \log_{10} W + 10 \log_{10} Por,$$

where

$P_{Txi}$ represents a preconfigured forwarding power of the $i$th first signal, $P_{Rxi}$ represents a receive power of the $i$th first signal, Gi represents the forwarding power information corresponding to the $i$th first signal, W represents a bandwidth corresponding to the $i$th first signal, and Por represents a quantity of ports corresponding to the $i$th first signal.

In an implementation, for each of the multiple first signals, measurement information corresponding to the first signal is a path loss of the first signal; and an $i$th first signal in the multiple first signals corresponds to the forwarding power information, and the forwarding power information satisfies the following form: $Gi = P_{0i} + PLi - P_{Rxi}$, where

$P_{0i}$ represents a preconfigured target receive power of the $i$th first signal, $P_{Rxi}$ represents a receive power of the $i$th first signal, Gi represents the forwarding power information corresponding to the $i$th first signal, and PLi represents a path loss of the $i^{th}$ first signal.

According to a fourth aspect, this application provides a communication method. The method includes: A relay device determines K1 pieces of measurement information based on K1 first signals, where each of the K1 pieces of measurement information corresponds to one of the K1 first signals, and K1 is an integer greater than 0; and the relay device sends the K1 pieces of measurement information to a first network device, and receives K2 pieces of first forwarding power information from the first network device, where each of the K2 pieces of first forwarding power information is determined based on one or more pieces of measurement information, and K2 is greater than or equal to K1.

In an implementation, the relay device receives a second signal from the first network device, and forwards the second signal to a terminal device based on second forwarding power information, where the second forwarding power information is one of the K2 pieces of first forwarding power information.

In an implementation, the K1 first signals are from at least one network device, the first network device is one of the at least one network device, and the second forwarding power information is determined, in the K2 pieces of first forwarding power information, based on measurement information corresponding to the first signal from the first network device.

In an implementation, there is an association relationship between the second forwarding power information and at least one of the following: a transmission direction used by the relay device to receive the second signal, a transmission direction used by the relay device to forward the second signal, or a transmission direction used by the first network device to send the second signal.

In an implementation, the method further includes: The relay device receives a third signal from a second network device, and forwards the third signal to a terminal device based on third forwarding power information, where the third forwarding power information is one of the K2 pieces of first forwarding power information.

In an implementation, the second forwarding power information and the third forwarding power information are same forwarding power information, and the second forwarding power information has an association relationship with at least one of the following: the transmission direction used by the relay device to receive the second signal; the transmission direction used by the relay device to forward the second signal; the transmission direction used by the first network device to send the second signal; a transmission direction used by the relay device to receive the third signal; a transmission direction used by the relay device to forward the third signal; or a transmission direction used by the second network device to send the third signal.

In an implementation, one of K1 carriers is used for transmission of each of the K1 first signals.

Before the relay device forwards the second signal to the terminal device based on the second forwarding power information, the method further includes: The relay device determines the second forwarding power information based on a quantity of carriers occupied by the second signal and K1 pieces of first forwarding power information.

In an implementation, the second forwarding power information satisfies the following form:

$$G\_2 = G\_1 + 10 \times \log_{10}(C/K1) \text{ or } G\_2 = G\_1 - 10 \times \log_{10}(C/K1),$$

where
$G\_1$ represents the first forwarding power information, $G\_2$ represents the second forwarding power information, and C represents the quantity of carriers occupied by the second signal.

In an implementation, K1 is greater than 1, K1 is less than Q, Q is a maximum quantity of carriers supported by the relay device, there is a preset correspondence between the K1 pieces of first forwarding power information and Q carriers, and the second forwarding power information satisfies the following form:

$$G = 10 \times log_{10}\left(\sum_{i=1}^{C} 10^{Gi/10}\right),$$

where G represents the second forwarding power information, C represents a quantity of carriers occupied by the second signal, and Gi represents first forwarding power information corresponding to an $i^{th}$ carrier occupied by the second signal.

In an implementation, the method further includes: The relay device receives first information from the first network device, where the first information indicates a power offset value; and that the relay device forwards the second signal to a terminal device based on the second forwarding power information includes: The relay device forwards the second signal to the terminal device based on the second forwarding power information and the power offset value.

In an implementation, the method further includes: The relay device receives second information from the first network device, where the second information indicates a power offset value corresponding to each of the K2 pieces of first forwarding power information; and that the relay device forwards the second signal to a terminal device based on the second forwarding power information includes: The relay device forwards the second signal to a third device based on the second forwarding power information and a power offset value corresponding to the second forwarding power information.

In an implementation, for each of the K1 first signals, measurement information corresponding to the first signal includes a receive power of the first signal; and first forwarding power information corresponding to an $i^{th}$ first signal in the K1 first signals satisfies any one of the following forms: $P_{Txi} = P_{Rxi} + Gi$;

$$P_{Txi} = P_{Rxi} + Gi + 10 \log_{10} W;$$

or

$$P_{Txi} = P_{Rxi} + Gi + 10 \log_{10} W + 10 \log_{10} Por,$$

where

$P_{Txi}$ represents a preconfigured forwarding power of the $i^{th}$ first signal, $P_{Rxi}$ represents a receive power of the $i^{th}$ first signal, Gi represents the first forwarding power information corresponding to the $i^{th}$ first signal, W represents a bandwidth corresponding to the $i^{th}$ first signal, and Por represents a quantity of ports corresponding to the $i^{th}$ first signal.

In an implementation, for each of the K1 first signals, measurement information corresponding to the first signal includes a path loss and a receive power of the first signal; and first forwarding power information corresponding to an $i^{th}$ first signal in the K1 first signals satisfies the following form: $Gi = P_{0i} + PLi - P_{Rxi}$, where

$P_{0i}$ represents a preconfigured target receive power of the $i^{th}$ first signal, $P_{Rxi}$ represents a receive power of the $i^{th}$ first signal, Gi represents the first forwarding power information corresponding to the $i^{th}$ first signal, and PLi represents a path loss of the $i^{th}$ first signal.

According to a fifth aspect, this application provides a communication method. The method includes: A first network device receives K1 pieces of measurement information from a relay device, where each of the K1 pieces of measurement information corresponds to one of K1 first signals, and K1 is an integer greater than 0; the first network device determines K2 pieces of first forwarding power information based on the K1 pieces of measurement information, where each of the K2 pieces of first forwarding power information is determined based on at least one piece of measurement information, K2 is greater than or equal to K1, and the first forwarding power information is used by the relay device to forward a signal to a terminal device; and the first network device sends the K2 pieces of first forwarding power information to the relay device.

According to a sixth aspect, this application provides a communication method. The method includes: A relay device determines K1 pieces of measurement information based on K1 first signals, where each of the K1 pieces of measurement information corresponds to one of the K1 first signals, one of the K1 first signals is from one of at least one network device, and K1 is an integer greater than 1; the relay device determines K2 pieces of first forwarding power information based on the K1 pieces of measurement information, where each of the K2 pieces of first forwarding power information is determined based on one or more pieces of measurement information, at least one piece of measurement information corresponds to different network devices, and K2 is greater than or equal to K1; and the relay device receives a second signal from a network device, and forwards the second signal to a terminal device based on the second forwarding power information, where the second forwarding power information is one of the K2 pieces of first forwarding power information.

In an implementation, the second signal is from an $i^{th}$ network device in multiple network devices.

The second forwarding power information is one of Ki pieces of first forwarding power information that are determined based on a first signal from the $i^{th}$ network device and that are in the K2 pieces of first forwarding power information, where Ki is an integer greater than 0.

In an implementation, each of the K1 first signals corresponds to a beam of the relay device and/or a beam of the network device, the second signal corresponds to a first beam of a first terminal device and/or a second beam of the network device, and the second forwarding power information is a first forwarding power corresponding to the first beam and/or the second beam in the Ki pieces of first forwarding power information.

In an implementation, the method further includes: The relay device receives first information from the network device, where the first information indicates a power offset value; and the forwarding the second signal to a terminal device based on the second forwarding power information includes: The relay device forwards the second signal to the terminal device based on the second forwarding power information and the power offset value.

In an implementation, the method further includes: The relay device receives first information from the network device, where the first information indicates a power offset value corresponding to each of the K2 pieces of first forwarding power information; and the forwarding the second signal to a terminal device based on the second forwarding power information includes: The relay device forwards the second signal to the terminal device based on the second forwarding power information and a power offset value corresponding to the second forwarding power information.

In an implementation, for each of the K1 first signals, measurement information corresponding to the first signal is a receive power of the first signal; and first forwarding power information corresponding to an $i^{th}$ first signal in the K1 first signals satisfies any one of the following forms: $P_{Txi} = P_{Rxi} + Gi$;

$$P_{Txi} = P_{Rxi} + Gi + 10\,log_{10}\,W;$$

or

$$P_{Txi} = P_{Rxi} + Gi + 10\,log_{10}\,W + 10\,log_{10}\,Por,$$

where

$P_{Txi}$ represents a preconfigured forwarding power of the ith first signal, $P_{Rxi}$ represents a receive power of the ith first signal, Gi represents the first forwarding power information corresponding to the ith first signal, W represents a bandwidth corresponding to the ith first signal, and Por represents a quantity of ports corresponding to the ith first signal.

In an implementation, for each of the K1 first signals, measurement information corresponding to the first signal is a path loss of the first signal; and first forwarding power information corresponding to an ith first signal in the K1 first signals satisfies the following form: $Gi = P_{0i} + PLi - P_{Rxi}$, where

$P_{0i}$ represents a preconfigured target receive power of the ith first signal, $P_{Rxi}$ represents a receive power of the ith first signal, Gi represents the first forwarding power information corresponding to the ith first signal, and PLi represents a path loss of the ith first signal.

According to a seventh aspect, this application provides a communication method. The method includes: A relay device determines K pieces of measurement information based on K first signals, where one of K carriers if used for transmission of each of the K first signals, and K is an integer greater than 0; and each of the K pieces of measurement information is determined based on one of the K first signals.

The relay device determines K pieces of first forwarding power information based on the K pieces of measurement information, where each of the K pieces of first forwarding power information is corresponding to one of the K carriers; and the relay device receives a second signal from a network device, and determines, based on a quantity of carriers occupied by the second signal and the K pieces of first forwarding power information, second forwarding power information used for forwarding the second signal.

In an implementation, the second forwarding power information satisfies the following form:

$$G2 = G1 + 10 \times log_{10}(C/K)\ \ or\ \ G2 = G1 - 10 \times log_{10}(C/K),$$

where

G1 represents the first forwarding power information, G2 represents the second forwarding power information, and C represents the quantity of carriers occupied by the second signal.

In an implementation, when K is less than Q, the method further includes: determining, based on K pieces of first forwarding power information, first forwarding power information corresponding to each of the Q carriers except the K carriers, where Q is a maximum quantity of carriers supported by the relay device.

In an implementation, the second forwarding power information satisfies the following form:

$$G = 10 \times log_{10}\left(\sum_{i=1}^{C} 10^{Gi/10}\right)$$ , where

G represents the second forwarding power information, C represents a quantity of carriers occupied by the second signal, and Gi represents first forwarding power information corresponding to an ith carrier occupied by the second signal.

In an implementation, for each of the K first signals, measurement information corresponding to the first signal is a receive power of the first signal; and first forwarding power information corresponding to an ith carrier in the K carriers satisfies any one of the following forms: $P_{Txi} = P_{Rxi} + Gi$;

$$P_{Txi} = P_{Rxi} + Gi + 10\,log_{10}\,W;$$

or

$$P_{Txi} = P_{Rxi} + Gi + 10\,log_{10}\,W + 10\,log_{10}\,Por,$$

where

$P_{Txi}$ represents a preconfigured forwarding power of the first signal in the ith carrier, $P_{Rxi}$ represents a receive power of the first signal in the ith carrier, Gi represents the first forwarding power information corresponding to the ith carrier, W represents a bandwidth corresponding to the second signal, and Por represents a quantity of ports corresponding to the first signal.

In an implementation, for each of the K first signals, measurement information corresponding to the first signal is a path loss of the first signal; and first forwarding power information corresponding to an $i^{th}$ carrier in the K carriers satisfies the following form:

$$Gi = P_{0i} + PLi - P_{Rxi},$$

where

$P_{0i}$ represents a preconfigured target receive power of the first signal in the $i^{th}$ carrier, $P_{Rxi}$ represents a receive power of the first signal in the $i^{th}$ carrier, Gi represents the first forwarding power information corresponding to the $i^{th}$ carrier, and PLi represents a path loss of the first signal corresponding to the $i^{th}$ carrier.

According to an eighth aspect, this application provides a communication method. The method includes: A relay device measures at least one first signal from a terminal device or a network device, to obtain at least one piece of measurement information; and the relay device determines forwarding power information based on the at least one piece of measurement information, where the forwarding power information is determined based on one or more pieces of measurement information, and the forwarding power information is used by the relay device to forward a signal from the network device or the terminal device.

In an implementation, the relay device receives a signal from a network device, and forwards the signal from the network device to a terminal device based on the forwarding power information.

In an implementation, the relay device receives a signal from a terminal device, and forwards the signal from the terminal device to a network device based on the forwarding power information.

According to a ninth aspect, this application provides a communication method. The method includes: A relay device measures at least one first reference signal from a first network device, to obtain at least one piece of first measurement information; the relay device measures at least one second reference signal from a second network device, to obtain at least one piece of second measurement information; and the relay device determines forwarding power information based on at least one of the at least one piece of first measurement information or the at least one piece of second measurement information, where the forwarding power information is used by the relay device to forward a signal from a network device or a terminal device. The network device is the first network device or the second network device.

According to a tenth aspect, an embodiment of this application provides a communication apparatus. The apparatus may be used in a relay device, and has a function of implementing the method performed by the relay device in the first aspect to the ninth aspect. The function may be implemented by hardware, or may be implemented by hardware executing corresponding software. The hardware or the software includes one or more units corresponding to the function. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

In a design, the communication apparatus is a communication chip, and the transceiver unit may be an input/output circuit or a port, an interface circuit, an output circuit, an input circuit, a pin, a related circuit, or the like of the communication chip. The processing unit may be a processing circuit or a logic circuit of the communication chip.

According to an eleventh aspect, an embodiment of this application provides a communication apparatus. The apparatus may be used in a network device, and has a function of implementing the method performed by the network device or the first network device in the first aspect to the ninth aspect. The function may be implemented by hardware, or may be implemented by hardware executing corresponding software. The hardware or the software includes one or more units corresponding to the function. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

In a design, the communication apparatus is a communication chip, and the transceiver unit may be an input/output circuit or a port, an interface circuit, an output circuit, an input circuit, a pin, a related circuit, or the like of the communication chip. The processing unit may be a processing circuit or a logic circuit of the communication chip.

According to a twelfth aspect, an embodiment of this application provides a communication apparatus. The communication apparatus includes a processor and a memory. The memory stores a computer program or computer instructions, and the processor is configured to invoke and run the computer program or the computer instructions stored in the memory, so that the processor implements any one of the possible implementations in the first aspect to the ninth aspect.

Optionally, the communication apparatus further includes an interface circuit. The processor is configured to control the interface circuit to receive and send a signal, information, data, and/or the like.

According to a thirteenth aspect, an embodiment of this application provides a communication apparatus. The communication apparatus includes a processor. The processor is configured to invoke a computer program or computer instructions in a memory, so that the processor implements any one of the possible implementations in the first aspect to the ninth aspect.

Optionally, the communication apparatus further includes an interface circuit. The processor is configured to control the interface circuit to receive and send a signal, information, data, and/or the like.

According to a fourteenth aspect, an embodiment of this application further provides a computer program product including instructions. When the computer program product runs on a computer, the computer is enabled to perform any one of the possible implementations in the first aspect to the ninth aspect.

According to a fifteenth aspect, an embodiment of this application further provides a computer-readable storage medium, including computer instructions. When the instructions are run on a computer, the computer is enabled to perform any one of the possible implementations in the first aspect to the ninth aspect.

According to a sixteenth aspect, an embodiment of this application further provides a chip apparatus including a processor, configured to invoke a computer program or computer instructions in the memory, so that the processor performs any one of the possible implementations in the first aspect to the ninth aspect.

Optionally, the processor is coupled to the memory through an interface.

According to a seventeenth aspect, an embodiment of this application provides a communication system. The communication system includes the communication apparatus (for example, the relay device) according to the tenth aspect and the communication apparatus (for example, the network device) according to the eleventh aspect.

These aspects or other aspects of this application are clearer and more comprehensible in descriptions of the following embodiments.

BRIEF DESCRIPTION OF DRAWINGS

FIG. 1 is a diagram of a multi-site transmission mode according to an embodiment of this application;

FIG. 2 is a diagram of another multi-site transmission mode according to an embodiment of this application;

FIG. 3(a) is a diagram of a network architecture applicable to an embodiment of this application;

FIG. 3(b) is a diagram of a network architecture applicable to an embodiment of this application;

FIG. 4 is a schematic flowchart of a communication method according to an embodiment of this application;

FIG. 5 is a schematic flowchart of signal transmission according to an embodiment of this application;

FIG. 6 is a schematic flowchart of signal transmission according to an embodiment of this application;

FIG. 7 is a schematic flowchart of a communication method according to an embodiment of this application;

FIG. 8 is a schematic flowchart of a communication method according to an embodiment of this application;

FIG. 9 is a schematic flowchart of a communication method according to an embodiment of this application;

FIG. 10 is a schematic flowchart of a communication method according to an embodiment of this application;

FIG. 11 is a schematic flowchart of a communication method according to an embodiment of this application;

FIG. 12 is a schematic flowchart of signal transmission according to an embodiment of this application;

FIG. 13 is a schematic flowchart of signal transmission according to an embodiment of this application;

FIG. 14 is a schematic flowchart of signal transmission according to an embodiment of this application;

FIG. 15 is a schematic flowchart of signal transmission according to an embodiment of this application;

FIG. 16 is a diagram of a structure of a communication apparatus according to an embodiment of this application; and

FIG. 17 is a diagram of a structure of a communication apparatus according to an embodiment of this application.

DESCRIPTION OF EMBODIMENTS

The following describes in detail embodiments of this application with reference to the accompanying drawings of the specification.

A communication method provided in embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or applied to various future communication systems, for example, a 6th generation (6th generation, 6G) communication system.

A method and an apparatus provided in embodiments of this application are based on a same or similar technical concept. Because problem solving principles of the method and the apparatus are similar, mutual reference may be made to implementations of the apparatus and the method. Repeated descriptions are not described.

The following first describes some terms in embodiments of this application, to facilitate understanding of a person skilled in the art.

(1) Beam (beam)

A beam is a communication resource, or is understood as spatial domain behavior of signal transmission. Specifically, the beam may be distribution of signal strength formed spatially in different transmission directions after signals are transmitted over an antenna, and one beam may correspond to one transmission direction. In this application, for ease of description, the beam and the transmission direction are considered as same terms, which are interchangeable. The beam may be a wide beam, a narrow beam, or a beam of another type, and a technology for forming a beam may be a beamforming technology or another technical means. The beamforming technology may be specifically a digital beamforming technology, an analog beamforming technology, and a hybrid digital/analog beamforming technology. Different beams may be considered as different resources.

The beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indicator (transmission configuration indicator, TCI) state (state) parameter, or by a spatial relation (spatial relation) parameter. Therefore, in this application, the beam may be replaced with a transmission direction, a transmission resource, a spatial domain filter, a spatial filter, a spatial domain parameter, a spatial parameter, a spatial domain setting, a spatial setting, QCL information, a QCL assumption, a QCL indication, a TCI state (including an uplink TCI state and a downlink TCI state), a spatial relationship, or the like. Alternatively, the beam may be replaced with another term for representing a beam. This is not limited in this application.

In this application, a beam for sending a signal may be referred to as a transmit beam (transmit beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting).

In this application, a beam for receiving a signal may be referred to as a receive beam (receive beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmit beam may be indicated by any one of the spatial relation, the uplink TCI-state, or a sounding reference signal (sounding reference signal, SRS) resource (indicating a transmit beam using the SRS). The uplink beam may alternatively be replaced with the SRS resource.

The transmit beam may be distribution of signal strength formed spatially in different directions after signals are transmitted over an antenna, and the receive beam may be distribution of signal strength, spatially in different directions, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital beamforming technology, a hybrid analog beamforming technology, or the like.

The beam usually corresponds to a resource. For example, during beam measurement, a network device measures different beams using different resources, a terminal device feeds back measured resource quality, and the network device knows quality of a corresponding beam. During data transmission, beam information is also indicated by a resource corresponding to the beam information. For example, the network device indicates beam information of the terminal device by using a TCI field in downlink control information (downlink control information, DCI).

Optionally, multiple beams that have same or similar communication features may be considered as one beam. One beam may include one or more antenna ports, configured to perform transmission of a data channel, a control channel, a sounding signal, or the like. The one or more antenna ports forming the beam may also be considered as one antenna port set.

(2) Reference signal

A reference signal may be any one of the following signals: a synchronization signal, a broadcast channel, a broadcast signal demodulation signal, a channel state information downlink signal (channel state information reference signal, CSI-RS), a cell-specific reference signal (cell specific reference signal, CS-RS), an SRS, a terminal-specific reference signal (user equipment specific reference signal, US-RS), a downlink control channel demodulation reference signal, a downlink data channel demodulation reference signal, a downlink phase noise tracking signal, or the like. A resource used for sending or receiving the reference signal may be referred to as a reference signal resource.

(3) Transmission reception point (transmission reception point, TRP)

A TRP is a physical unit used by a network device to receive and send a signal, and one network device may include one or more TRPs. Each TRP is capable of independently performing downlink data transmission and uplink data reception. A network side sends a reference signal and a data signal to a terminal device and receives an uplink signal from the terminal device by using one or more TRPs. One TRP may include one or more antennas.

(4) Multi-site transmission mode

A mode in which a terminal device simultaneously communicates with multiple TRPs is referred to as a multi-site transmission mode or a multi-TRP transmission mode.

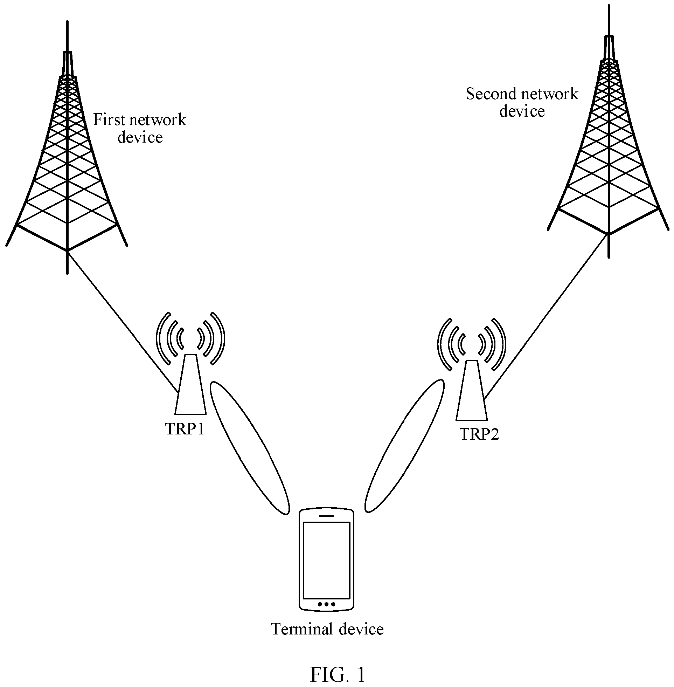

When a terminal device supports simultaneous communication with multiple TRPs, the multiple TRPs may belong to a same cell, or may belong to different cells. FIG. 1 is a diagram of a multi-site transmission mode according to an embodiment of this application. In the figure, two TRPs, namely, a TRP 1 and a TRP 2, are used as an example. The TRP 1 and the TRP 2 in FIG. 1 belong to different cells, the TRP 1 belongs to a first network device, and the TRP 2 belongs to a second network device.

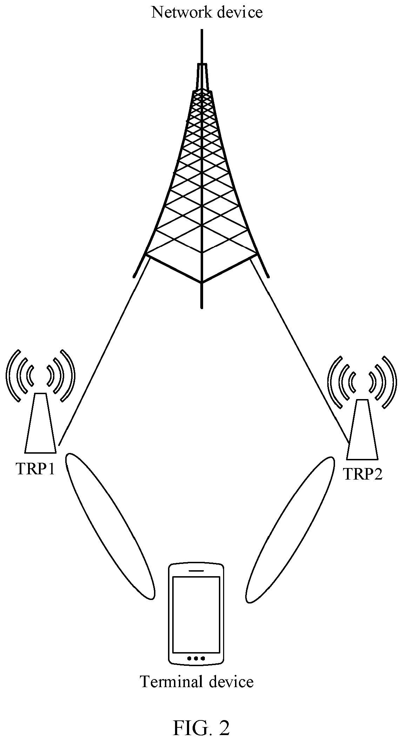

FIG. 2 is a diagram of another multi-site transmission mode according to an embodiment of this application. In the figure, two TRPs, namely, a TRP 1 and a TRP 2, are used as an example. The TRP 1 and the TRP 2 in FIG. 2 belong to a same cell, in other words, the TRP 1 and the TRP 2 belong to a same network device.

The network device in embodiments of this application may be a device in a wireless network. For example, the network device may be a device that is deployed in a radio access network and that provides a wireless communication function for a terminal device. For example, the network device may be a radio access network (radio access network, RAN) node that connects a terminal device to a wireless network, and may also be referred to as an access network device.

The network device includes but is not limited to: a TRP, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), or the like; or may be a network device in a 5G mobile communication system, for example, a next generation NodeB (next generation NodeB, gNB), a transmission reception point (TRP), or a TP in an NR system; or one antenna panel or one group of antenna panels (including multiple antenna panels) of a base station in a 5G mobile communication system. Alternatively, the network device may be a network node that forms a gNB or a transmission point, for example, a BBU or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, or an AAU node. In addition, the CU may be classified as a network device in the RAN, or a network device in a core network (core network, CN). This is not limited in this application.

The terminal device in embodiments of this application may be a wireless terminal device that can receive scheduling and indication information of the network device. The terminal device may be a device that provides a user with voice and/or data connectivity, a handheld device with a wireless connection function, or another processing device connected to a wireless modem.

The terminal device, a terminal for short, may also be referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or a vehicle-mounted device having a wireless connection function. Currently, some examples of terminal devices are as follows: a mobile phone (mobile phone), a tablet computer, a notebook computer, a palmtop computer, a mobile internet device (mobile internet device, MID), a wearable device, a virtual reality (virtual reality, VR) device, an augmented reality (AR) device, a wireless terminal in industrial control (industrial control), a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper robot, a speaker, a set-top box, or the like.

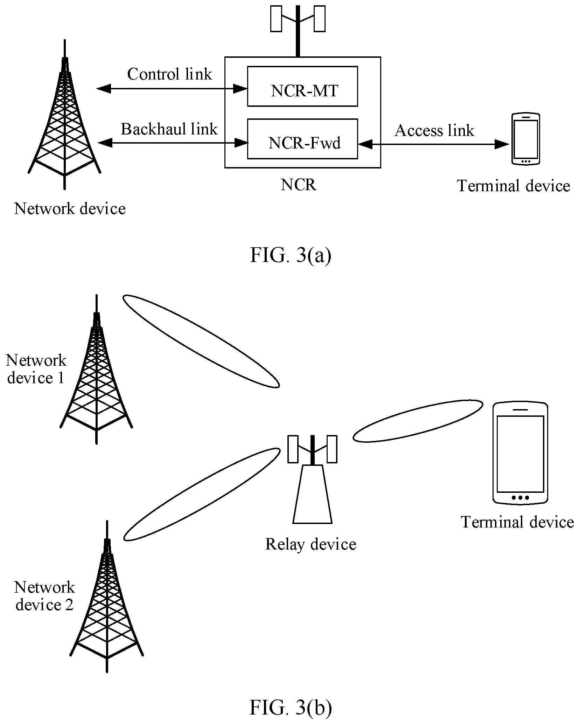

A relay device can forward a signal of the network device to the terminal device, and can also forward a signal of the terminal device to the network device. A specific implementation of the relay device is not limited, and any device that has the foregoing function may be used as the relay device. The relay device may also be referred to as a network controlled repeater (network-controlled repeater, NCR) or the like, which is collectively referred to as a relay device in this application. In an implementation, as shown in FIG. 3(a), an example in which the relay device is an NCR is used. The relay device may include an NCR mobile terminal (NCR-mobile termination, NCR-MT) entity and an NCR forwarding (NCR-forwarding, NCR-Fwd) entity. A link between the NCR-MT entity in the NCR and the network device may be referred to as a control link (control link). The NCR-MT entity is a function entity that communicates with the network device through the control link, to implement information exchange (for example, side control information (side control information) or control information). In an implementation, the control link corresponds to an NR Uu interface of the network device.

The NCR-Fwd entity amplifies and forwards an uplink/downlink radio frequency signal between the network device and the terminal device through a backhaul link (backhaul link) and an access link (access link). The control information received by the NCR-MT entity from the network device may be used to control behavior of the NCR-Fwd entity. A link between the NCR-Fwd entity in the NCR and the network device may be referred to as a backhaul link, and a link between the NCR-Fwd entity in the NCR and the terminal device may be referred to as an access link.

The relay device includes at least two antenna panels, where one antenna panel is configured to communicate with the network device, and the other antenna panel is configured to communicate with the terminal device. One antenna panel of the relay device is configured to receive a signal, and after the received signal is amplified, the received signal is forwarded by the other antenna panel.

In an implementation, a beam used for communication between the relay device and the network device may be referred to as a relay backhaul side beam, and a beam used for communication between the relay device and the terminal device may be referred to as a relay access side beam. If the relay device forwards a downlink signal, the relay device may receive the downlink signal by using the relay backhaul side beam, and forward the downlink signal by using the relay access side beam. If the relay device forwards an uplink signal, the relay device may receive the uplink signal by using the relay access side beam, and forward the uplink signal by using the relay backhaul side beam.

In this application, the relay backhaul side beam may be replaced with a relay backhaul side resource, and the relay access side beam may be replaced with a relay access side resource.

The relay device may forward signals of multiple network devices to the terminal device, or may forward a signal of the terminal device to multiple network devices. FIG. 3(b) is a diagram of a network architecture applicable to this application. FIG. 3(b) includes two network devices: a network device 1 and a network device 2. The relay device may forward signals of the network device 1 and the network device 2 to the terminal device, or may forward the signal of the terminal device to the network device 1 and the network device 2.

When the relay device works, for a signal from the network device, the relay device amplifies the signal received through a backhaul side antenna panel, and forwards the signal to the terminal device through an access side antenna panel. If an access side of the relay device has a capability of multiple beams, when forwarding a signal, the relay device aligns a beam on the access side with the terminal device, to obtain good transmission performance.

An amplifier circuit of the relay device brings noise to the forwarded signal. When the noise of the relay device is transmitted to a receive end, noise interference is caused to the receive end. If the relay device amplifies the signal by an excessively large quantity of times, an output power of the signal forwarded by the relay device is large, and a negative effect is that interference is caused; and in addition, a power amplifier of the relay device enters a saturation region, and consequently, the forwarded signal is distorted, and the receive end cannot correctly demodulate the signal. Therefore, this application provides a method, so that a relay device can accurately determine a forwarding power when forwarding a signal.

In this application, there is an association between the forwarding power used by the relay device to forward the signal and an amplification gain of the signal. In an implementation, the amplification gain may correspond to power control (or a relay amplification forwarding power or a relay transmit power). For example, if the receive power for receiving the signal is $P_R$ (unit: decibel-milliwatt (dBm)), and the amplification gain is G (unit: decibel (dB)), the transmit power of the signal is $P_T = G + P_R$ (unit: decibel-milliwatt (dBm)). In a communication system related to a reflecting surface, the amplification gain may be correspondingly a reflection loss.

It may be understood that the examples in embodiments of this application are merely intended to help a person skilled in the art understand embodiments of this application, but are not intended to limit embodiments of this application to a specific scenario shown in the examples. It is clear that a person skilled in the art can make various equivalent modifications or changes based on the examples provided in embodiments of this application, and such modifications or changes also fall within the scope of embodiments of this application.

It may be further understood that, some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and should not constitute any limitation on an implementation process of embodiments of this application.

It may be further understood that some message names in embodiments of this application, for example, a first message, do not limit the protection scope of embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In the following embodiments of this application, steps in the procedures are merely examples for description, and this is not strictly limited. Some of the steps in the procedures may be reserved based on an actual situation, and/or a sequence of some steps may be adjusted. In addition, sequence numbers of the foregoing steps do not mean an execution sequence. The execution sequence of the processes should be determined based on functions and internal logic of the processes, and should not constitute any limitation on the implementation processes of embodiments of this application.

In this application, the beam may be replaced with a term like a transmission direction, a transmission resource, a spatial domain parameter, or a spatial parameter. This is not limited in this application.

The following embodiments of this application may be combined with each other. This is not limited in this application.

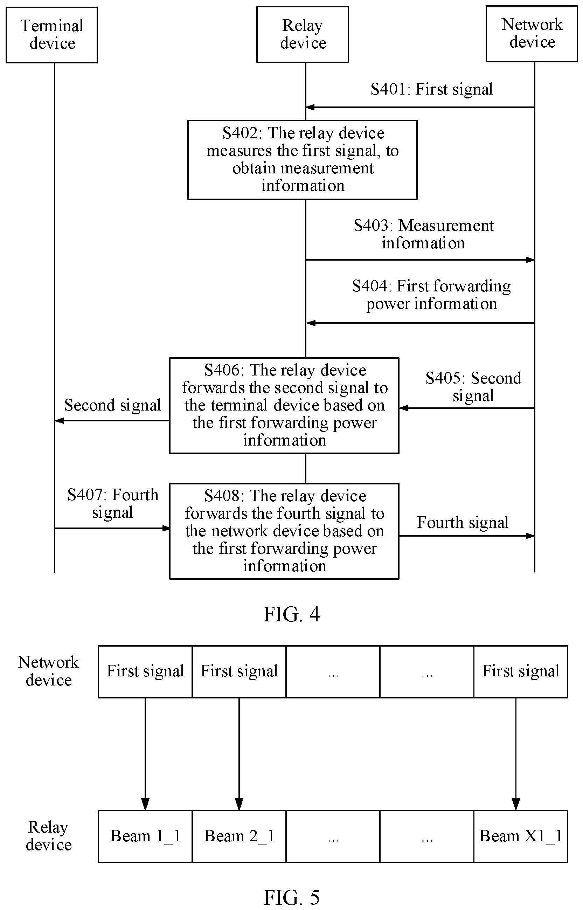

FIG. 4 is a schematic flowchart of a communication method according to an embodiment of this application. The procedure is described by using an example in which a network device sends a reference signal to a relay device, and the relay device forwards a measurement result of the reference signal to the network device. The method includes the following steps.

S401: The network device sends a first signal to the relay device.

In this application, the network device may configure, for the relay device, parameters needed for determining first forwarding power information, for example, parameters such as a preconfigured forwarding power of the first signal and a first signal bandwidth W. A specific configuration process is not limited in this application.

The first signal may be a reference signal. For example, the first signal is any one of a demodulation reference signal (demodulation reference signal, DMRS), a channel state information reference signal (channel state information reference signal, CSI-RS), or a synchronization signal and broadcast channel block (synchronization signal/physical broadcast channel block, SS/PBCH block, SSB).

In an implementation, before sending the first signal, the network device may send configuration information of the first signal to the relay device. The configuration information indicates information such as a transmit power, a time-frequency resource location, and a transmission direction (namely, a beam) of the first signal. The configuration information may be carried in any one of a physical broadcast channel (physical broadcast channel, PBCH), remaining minimum system information (remaining minimum system information, RMSI), a system information block (system information block, SIB) 1, a SIB2, a SIB3, a medium access control (medium access control, MAC) control element (control element, CE), DCI, RRC signaling, or system information.

In this application, the network device may send multiple first signals to the relay device. In an implementation, as shown in FIG. 5, the relay device includes X1 beams, in other words, X1 transmission directions, which are respectively a beam 1_1 to a beam X1_1, and the network device sends at least X1 first signals. The relay device receives at least one first signal by using each beam.

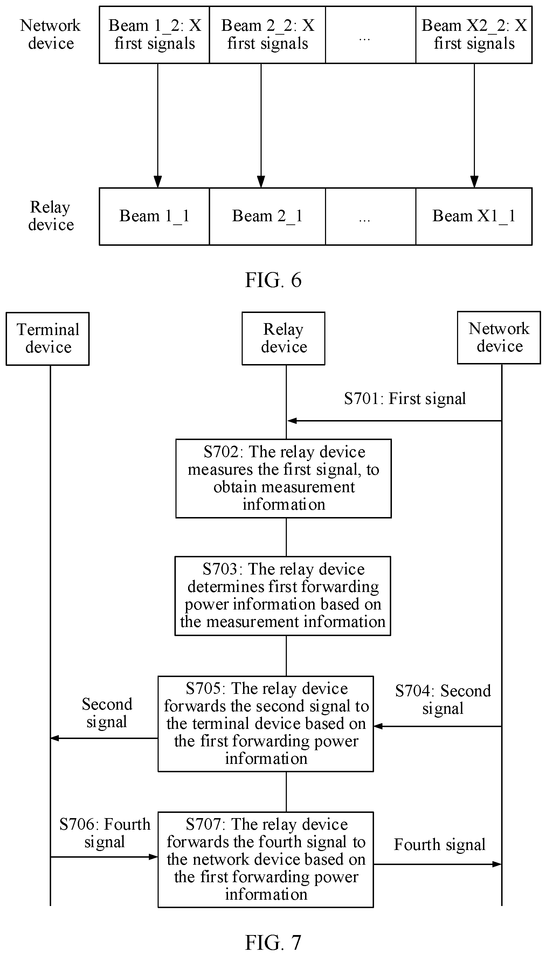

In an implementation, as shown in FIG. 6, the relay device includes X1 beams: a beam 1_1 to a beam X1_1, and the network device includes X2 beams: a beam 1_2 to a beam X2_2. In this case, the network device may send at least X1*X2 first signals. The network device sends at least X1 first signals by using each beam, and the relay device receives at least X2 first signals by using each beam, so that the relay device receives, by using each beam, first signals sent by the network device by using the beam. For example, the network device sends X1 first signals by using the beam 1_2, and the relay device receives the X1 first signals by using the beam 1_1. Then, the network device sends X1 first signals by using the beam 1_2, and the relay device receives the X1 first signals by using the beam 2_1. The foregoing process is repeated until X1 first signals are sent by using all beams of the network device.

S402: The relay device measures the first signal, to obtain measurement information.

In an implementation, the relay device receives the first signal by using a relay backhaul side beam.

It may be understood that, when the relay device is an NCR, an NCR-MT entity measures the first signal.

If the network device sends multiple first signals, the relay device can obtain multiple pieces of measurement information, and one piece of measurement information is determined based on one or more first signals. For example, one signal corresponds to two pieces of measurement information, and multiple pieces of measurement information may be obtained by receiving one signal for multiple times; or different ports of one signal are simultaneously sent by using multiple beams, and different beams correspond to different measurement values; or signals at different frequency locations are simultaneously sent, and signals at different frequency locations correspond to different measurement values. This manner may be applied to all embodiments of this specification.

In an implementation, the measurement information includes one or more of the following: a receive power of the first signal; a channel quality indicator (CQI) of the first signal; a reference signal received power (RSRP) of the first signal; reference signal received quality (RSRQ) of the first signal; a received signal strength indicator (RSSI) of the first signal; a path loss of the first signal; or backhaul side channel information (CSI), for example, an observed phase difference between receive antennas.

The path loss of the first signal is a difference between a transmit power at which the network device sends the first signal and a receive power at which the relay device receives the first signal.

S403: The relay device sends the measurement information of the first signal to the network device.

It may be understood that, when the relay device is the NCR, the NCR-MT entity sends the measurement information.

If the network device sends multiple first signals, the relay device sends measurement information of all of the multiple first signals to the network device, or may send measurement information of at least one of the multiple first signals to the network device. This is not limited in this application.

S404: The network device determines the first forwarding power information based on the measurement information, and sends the first forwarding power information to the relay device.

If the relay device sends multiple pieces of measurement information to the network device, the network device may determine multiple pieces of first forwarding power information, where each piece of first forwarding power information is determined based on at least one piece of measurement information.

In an implementation, the network device may send the first forwarding power information by using any one of RRC, a medium access control (MAC) control element (CE), or DCI.

How to specifically determine the first forwarding power information is not limited in this application. The first forwarding power information may be determined based on at least one of a preconfigured forwarding power of the first signal, a receive power of the first signal, a bandwidth corresponding to the first signal, a quantity of ports corresponding to the first signal, a backhaul side antenna gain $G_{BH}$, an access side antenna gain $G_{AC}$, or a controller antenna gain $P_{MT}$. The following provides several possible implementations. In a first possible implementation, if the measurement information includes the receive power of the first signal, the first forwarding power information corresponding to the first signal satisfies any one of the following forms:

$$P_{Tx} = P_{Rx} + G;$$

$$P_{Tx} = P_{Rx} + G + 10 \log_{10} W;$$

or

$$P_{Tx} = P_{Rx} + G + 10 \log_{10} W + 10 \log_{10} Por,$$

where

$P_{Tx}$ represents the preconfigured forwarding power of the first signal, where the forwarding power may be configured by the network device, and a unit of the forwarding power is decibel-milliwatt (dBm); $P_{Rx}$ represents the receive power of the first signal, and a unit of the receive power is dBm; G represents the first forwarding power information corresponding to the first signal, and a unit of the first forwarding power information is decibel (dB); W represents the bandwidth corresponding to the first signal; and Por represents the quantity of ports corresponding to the first signal.

In a second possible implementation, if the measurement information includes the path loss and the receive power of the first signal, the first forwarding power information corresponding to the first signal satisfies the following form:

$$G = P_0 + PL - P_{Rx},$$

where

$P_0$ represents a preconfigured target receive power of the first signal, where the target receive power may be configured by the network device, and a unit of the target receive power is dBm; $P_{Rx}$ represents the receive power of the first signal, and a unit of the receive power is dBm; G represents the first forwarding power information corresponding to the first signal, and a unit of the first forwarding power information is dB; and PL represents the path loss of the first signal.

In a third possible implementation, the first forwarding power information corresponding to the first signal may be determined according to the foregoing implementation, and forwarding power information $G_{Actual}$ actually used by the relay reporting device satisfies at least one of the following:

$$G_{Actual} = G - G_{AC};$$

$$G_{Actual} = G - G_{BH};$$

$$G_{Actual} = G - G_{BH} - G_{AC};$$

$$G_{Actual} = G + G_{MT} - G_{BH} - G_{AC};$$

or

$$G_{Actual} = G - G_{MT} - G_{BH} - G_{AC}.$$

In a fourth possible implementation, the first forwarding power information corresponding to the first signal satisfies any one of the following forms:

$$P_{Tx} = P_{Rx} + G - G_{AC};$$

$$P_{Tx} = P_{Rx} + G + 10 \log_{10} W - G_{AC};$$

$$P_{Tx} = P_{Rx} + G + 10 \log_{10} W + 10 \log_{10} Por - G_{AC};$$

or

$$G - G_{AC} = P_0 + PL - P_{Rx}.$$

In the foregoing formulas, $G_{AC}$ may be alternatively replaced with $G_{BH}$, $G_{BH} + G_{AC}$, $G_{BH} + G_{AC} - G_{MT}$, $G_{BH} + G_{AC} + G_{MT}$, or the like, and examples are not listed one by one herein.

S405: The first network device sends a second signal.

Specific content carried in the second signal is not limited, and may be data or control signaling. This is not limited in this application.

S406: The relay device forwards the second signal to a terminal device based on the first forwarding power information.

In an implementation, the relay device receives the second signal by using a relay backhaul side beam, and forwards the second signal by using a relay access side beam. The relay backhaul side beam used by the relay device to receive the second signal and/or the relay access side beam used by the relay device to forward the second signal may be configured by the network device, or may be determined by the relay device. This is not limited in this application. If the relay backhaul side beam and/or the relay access side beam are/is configured by the network device, the network device may indicate, by using control information, the relay backhaul side beam used by the relay device to receive the second signal and/or the relay access side beam used by the relay device to forward the second signal. In the following other procedures in this application, beams used by the relay device to forward the uplink signal and the downlink signal may also be indicated by the network device by using control information. Details are not described one by one.

The relay device may determine a transmit power (or an amplification gain) of the second signal based on the first forwarding power information, to forward the second signal to the terminal device based on the transmit power.

How the relay device specifically determines the transmit power of the second signal based on the first forwarding power information is not limited in this application. For example, the transmit power $P_{Tx2}$ of the second signal satisfies the following form:

$$P_{Tx2} = P_{Rx2} + G,$$

where

$P_{Rx2}$ represents a receive power of the second signal, and G represents the first forwarding power information.

In addition, the second signal further corresponds to a maximum transmit power. The maximum transmit power may be a maximum uplink transmit capability of the relay device or a maximum uplink transmit power allowed to send a signal. If the transmit power determined based on the first forwarding power information is greater than the maximum transmit power, the relay device forwards the second signal to the terminal device based on the maximum transmit power.

In this application, the network device may further send power offset value indication information to the relay device, where the power offset value indication information indicates at least one power offset value. In an implementation, each power offset value corresponds to one time unit, and the time unit may be a slot, a subframe, or the like. When forwarding the second signal in a first time unit, the relay device may forward the second signal to the terminal device based on the first forwarding power information and a power offset value corresponding to the first time unit. In other words, when forwarding the second signal in the first time unit, a transmit power of the second signal is determined based on the first forwarding power information and the power offset value corresponding to the first time unit.

In an implementation, each power offset value corresponds to one signal type, and the signal type includes, but is not limited to, a broadcast signal, a data signal, a control signal, and the like. When forwarding the second signal in the first time unit, the relay device may forward the second signal to the terminal device based on the first forwarding power information and a power offset value corresponding to a signal type of the second signal. For example, the broadcast signal corresponds to a first power offset value, the data signal corresponds to a second power offset value, and the control signal corresponds to a third power offset value. If the second signal is the broadcast signal, the relay device forwards the second signal to the terminal device based on the first forwarding power information and the first power offset value.

In an implementation, each power offset value corresponds to one beam of the relay device. It should be understood that, the beam herein may be at least one of the following: a relay backhaul side beam, a relay access side beam, a paired relay backhaul side beam-access side beam, or a transmit beam of the network device. When forwarding the second signal in the first time unit, the relay device may forward the second signal to the terminal device based on the first forwarding power information and a power offset value corresponding to a beam of the second signal. For example, a beam 1 of the relay device corresponds to a first power offset value, and a beam 2 of the relay device corresponds to a second power offset value. If the relay device forwards the second signal by using the beam 2, the relay device forwards the second signal to the terminal device based on the first forwarding power information and the second power offset value.

In this application, the first forwarding power information used by the relay device to forward the second signal may further have an association relationship with at least one of a beam used by the relay device to receive the second signal or a beam used by the relay device to forward the second signal. The beam herein may be a relay backhaul side beam, a relay access side beam, a paired relay backhaul side beam-access side beam, or a transmit beam of the network device. For example, there is an association relationship between the first forwarding power information used by the relay device to forward the second signal and the beam used by the relay device to receive the second signal. If the relay device receives the second signal by using a first beam (for example, the first beam is a relay backhaul side beam), the first forwarding power information used by the relay device to forward the second signal is determined based on a first signal received by using the first beam. For example, the relay device receives a signal 0 by using a beam 0, and receives a signal 1 by using a beam 1. Measurement information corresponding to the signal 0 is for determining forwarding power information 0, and measurement information corresponding to the signal 1 is for determining forwarding power information 1. When the relay device receives the second signal by using the beam 1, the relay device forwards the second signal based on the forwarding power information 1.

For example, there is an association relationship between the first forwarding power information used by the relay device to forward the second signal and the beam used by the relay device to forward the second signal. For example, a correspondence between a relay backhaul side beam and a relay access side beam of the relay device may be established in advance. If the relay device forwards the second signal by using a first beam, and a relay backhaul side beam corresponding to the first beam is a second beam, the first forwarding power information used by the relay device to forward the second signal is determined based on a first signal received by using the second beam. For example, a beam 0 and a beam 1 are relay backhaul side beams, a beam 2 and a beam 3 are relay access side beams, the beam 0 corresponds to the beam 2, and the beam 1 corresponds to the beam 3. The relay device receives a signal 0 by using the beam 0, and receives a signal 1 by using the beam 1. Measurement information corresponding to the signal 0 is for determining forwarding power information 0, and measurement information corresponding to the signal 1 is for determining forwarding power information 1. When the relay device forwards the second signal by using the beam 2, the relay device forwards the second signal based on the forwarding power information 0. When the relay device forwards the second signal by using the beam 3, the relay device forwards the second signal based on the forwarding power information 1.

In this application, the first forwarding power information used by the relay device to forward the second signal may further have an association relationship with a beam used by the network device to send the second signal. Specifically, if the network device sends the second signal by using a second beam, the first forwarding power information used by the relay device to forward the second signal is determined based on a first signal sent by using the second beam. For example, the network device sends a signal 0 by using a beam 0, and correspondingly, the relay device receives the signal 0 by using a beam 1, where measurement information corresponding to the signal 0 is for determining forwarding power information 0; the network device sends a signal 1 by using a beam 2, and correspondingly, the relay device receives the signal 1 by using the beam 1, where measurement information corresponding to the signal 1 is for determining forwarding power information 1; and the network device sends a signal 2 by using the beam 2, and correspondingly, the relay device receives the signal 2 by using the beam 4, where measurement information corresponding to the signal 2 is for determining forwarding power information 3. If the network device sends the second signal by using the beam 2, and the relay device receives the second signal by using the beam 1, the relay device forwards the second signal based on the forwarding power information 1.

In this application, the relay device may further forward the signal from the terminal device to the network device based on the first forwarding power information. For details, refer to descriptions in S407 and S408.

S407: The terminal device sends a fourth signal.

Specific content carried in the fourth signal is not limited, and may be data, or may be information or a signal other than data. This is not limited in this application.

S408: The relay device forwards the fourth signal to the network device based on the first forwarding power information.

In an implementation, the relay device receives the fourth signal by using a relay access side beam, and forwards the fourth signal by using a relay backhaul side beam. The relay backhaul side beam used by the relay device to forward the fourth signal may be configured by the network device, or may be determined by the relay device. This is not limited in this application.

In this application, the first forwarding power information used by the relay device to forward the fourth signal may further have an association relationship with the beam used by the relay device to forward the fourth signal. For details, refer to descriptions in S406. Details are not described herein again.

In this application, the first forwarding power information used by the relay device to forward the fourth signal may further have an association relationship with a beam used by the terminal device to send the fourth signal. For details, refer to descriptions in S406. Details are not described herein again.

In an implementation, a forwarding power used by the relay device to forward the second signal is associated with a forwarding power used by the relay device to forward the fourth signal. For example, the forwarding power information is an amplification gain, and an amplification gain G2 for forwarding the second signal and an amplification gain G3 for forwarding the fourth signal satisfy G2+O=G3. In an implementation, the offset value O is greater than 0, in other words, an uplink signal is amplified by using a larger amplification gain. Based on this manner, uplink coverage performance can be better, and a difference between downlink and uplink coverage in a network can be reduced.

According to the foregoing method, the relay device measures the signal from the network device to obtain the measurement information, so that the network device determines the forwarding power information based on the measurement information. The relay device can forward the signal of the network device or the terminal device based on the forwarding power information, to accurately control the forwarding power of the signal, and avoid a phenomenon like distortion of a forwarded signal caused when the forwarding power is large.

In this application, alternatively, the relay device may determine the forwarding power information based on the measurement information (or the first signal, or a measurement reference signal). For details, refer to the following procedure.

FIG. 7 is a schematic flowchart of a communication method according to an embodiment of this application. The method includes the following steps.

S701: A network device sends a first signal to a relay device.

S702: The relay device measures the first signal, to obtain measurement information.

For specific content of S701 and S702, refer to descriptions in S401 and S402. Details are not described herein again.

S703: The relay device determines first forwarding power information based on the measurement information (or the first signal, or a measurement reference signal).

In this application, the network device may configure, for the relay device, parameters needed for determining first forwarding power information, for example, a preconfigured forwarding power $P_{Tx}$ of the first signal and a first signal bandwidth W. How the relay device specifically determines the first forwarding power information based on the measurement information (or the first signal, or the measurement reference signal) is not limited in this application.

For example, refer to descriptions in S404. Details are not described herein again.

S704: The first network device sends a second signal.

Specific content carried in the second signal is not limited, and may be data or control signaling. This is not limited in this application.

S705: The relay device forwards the second signal to a terminal device based on the first forwarding power information.

In an implementation, the relay device receives the second signal by using a relay backhaul side beam, and forwards the second signal by using a relay access side beam. The relay access side beam used by the relay device to forward the second signal may be configured by the network device, or may be determined by the relay device. This is not limited in this application.

S706: The terminal device sends a fourth signal.

Specific content carried in the fourth signal is not limited, and may be data, or may be information other than data. This is not limited in this application.

S707: The relay device forwards the fourth signal to the network device based on the first forwarding power information.

In an implementation, the relay device receives the fourth signal by using a relay backhaul side beam, and forwards the fourth signal by using a relay access side beam. The relay backhaul side beam used by the relay device to forward the fourth signal may be configured by the network device, or may be determined by the relay device. This is not limited in this application.

For specific content of S704 to S707, refer to descriptions in S405 to S408 or another embodiment. Details are not described herein again.

According to the foregoing method, the relay device measures the signal from the network device to obtain the measurement information, so as to determine the forwarding power information based on the measurement information. The relay device can forward the signal of the network device or the terminal device based on the forwarding power information, to accurately control the forwarding power of the signal, and avoid a phenomenon like distortion of a forwarded signal caused when the forwarding power is large.

The foregoing procedure describes a case in which the network device sends the first signal, and the relay device measures the first signal. In this application, alternatively, the terminal device may send the first signal, and the relay device measures the first signal from the terminal device. Details are described below.

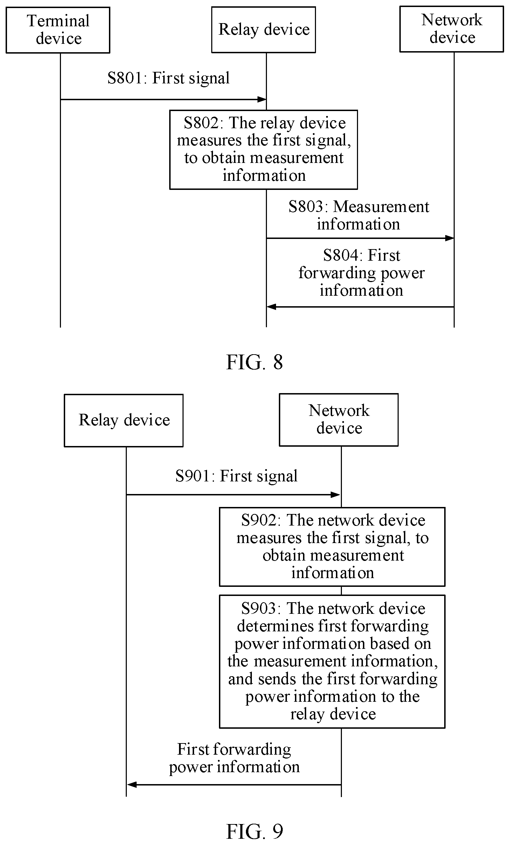

FIG. 8 is a schematic flowchart of a communication method according to an embodiment of this application. The method includes the following steps.

S801: A terminal device sends a first signal to a relay device.

The terminal device or a network device may configure, for the relay device, parameters needed for determining first forwarding power information, for example, parameters such as a preconfigured forwarding power $P_{Tx}$ of the first signal and a first signal bandwidth W. A specific configuration process is not limited in this application.

The first signal may be a reference signal. For example, the first signal is any one of a channel sounding reference signal (Sounding reference signal, SRS) signal, a physical random access (physical random access channel, PRACH) signal, or a random access preamble (preamble).

S802: The relay device measures the first signal, to obtain measurement information.

S803: The relay device sends the measurement information of the first signal to the network device.

S804: The network device determines the first forwarding power information (or the first signal, or a measurement reference signal) based on the measurement information, and sends the first forwarding power information to the relay device.

In a possible implementation, alternatively, the relay device may not send the measurement information to the network device, and the relay device may determine the first forwarding power information based on the measurement information (or the first signal, or the measurement reference signal). A specific process is not described again.

In a possible implementation, S803 and S804 may be replaced with the following: The relay device may alternatively send the measurement information to the terminal device; and the terminal device determines the first forwarding power information based on the measurement information (or the first signal, or the measurement reference signal), and sends the first forwarding power information to the relay device (or the terminal device first reports the first forwarding power information to the network device, and then the network device sends configuration information to the relay device, where the configuration information is for determining a first forwarding power).

For specific content of S802 to S804, refer to descriptions in S402 to S404. Details are not described herein again.

Further, the relay device may forward the second signal from the network device to the terminal device based on the first forwarding power information, and the relay device may forward a fourth signal from the terminal device to the network device based on the first forwarding power information. For a specific process, refer to descriptions in S405 to S408 or another embodiment. Details are not described herein again.

In this application, alternatively, a relay device may further send a first signal to a network device. Specifically, FIG. 9 is a schematic flowchart of a communication method according to an embodiment of this application. The method includes the following steps.

S901: The relay device sends the first signal to the network device.

In an implementation, the network device may configure information such as a transmit power and a time-frequency resource location of the first signal for the relay device. A specific configuration process is not limited in this application.

S902: The network device measures the first signal, to obtain measurement information.

S903: The network device determines first forwarding power information (or the first signal, or a measurement reference signal) based on the measurement information, and sends the first forwarding power information to the relay device.

In an implementation, the network device may further indicate beam information to the relay device. For example, the network device indicates backhaul side beam information (or indicates an index of a first signal on a backhaul side) to the relay device. The network device further indicates a backhaul side beam, so that a more accurate backhaul-side beam is used during relay amplification and forwarding, to improve signal forwarding performance.

For specific content of S902 and S903, refer to descriptions in S402 and S403. Details are not described herein again.

Further, the relay device may forward a second signal from the network device to the terminal device based on the first forwarding power information, and the relay device may forward a fourth signal from the terminal device to the network device based on the first forwarding power information. For a specific process, refer to descriptions in S405 to S408 or another embodiment. Details are not described herein again.

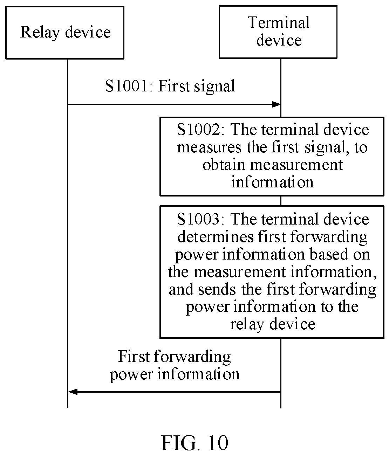

In this application, alternatively, a relay device may further send a first signal to a terminal device. Specifically, FIG. 10 is a schematic flowchart of a communication method according to an embodiment of this application. The method includes the following steps.

S1001: The relay device sends the first signal to the terminal device.

In an implementation, a network device may configure information such as a transmit power and a time-frequency resource location of the first signal for the relay device. A specific configuration process is not limited in this application.

S1002: The terminal device measures the first signal, to obtain measurement information.

S1003: The terminal device determines first forwarding power information (or the first signal, or a measurement reference signal) based on the measurement information, and sends the first forwarding power information to the relay device.

For specific content of S1002 and S1003, refer to descriptions in S402 and S403. Details are not described herein again.

Further, the relay device may forward a second signal from the network device to the terminal device based on the first forwarding power information, and the relay device may forward a fourth signal from the terminal device to the network device based on the first forwarding power information. For a specific process, refer to descriptions in S405 to S408 or another embodiment. Details are not described herein again.

This application may be further applied to a scenario of a multi-site transmission mode or a multi-carrier transmission mode. Details are described below.

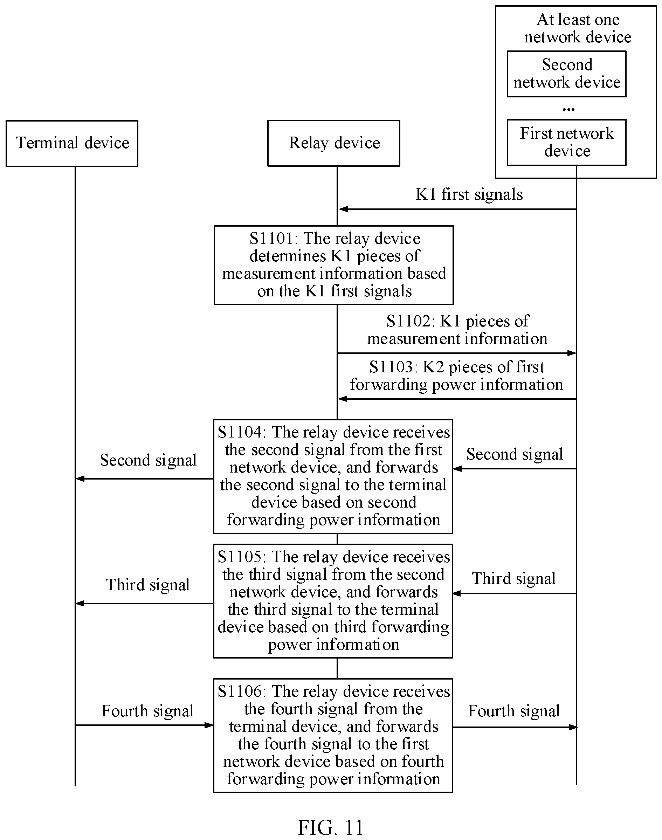

FIG. 11 is a schematic flowchart of a communication method according to an embodiment of this application. The method includes the following steps.

S1101: A relay device determines K1 pieces of measurement information based on K1 first signals, where K1 is an integer greater than 0. In an implementation, the K1 first signals are from at least one network device, and each network device sends at least one first signal. For example, one network device corresponds to one TRP. For another example, one network device corresponds to one base station, and one base station corresponds to one or more TRPs. The network device may send the first signal by using one or more TRPs. For example, when this application is applied to the scenario of the multi-site transmission mode, this implementation may be applied.

The network device may configure, for the relay device, parameters needed for determining first forwarding power information, for example, parameters such as a preconfigured forwarding power of the first signal and a first signal bandwidth W. A specific configuration process is not limited in this application.

It should be understood that, in this application, multiple network devices may alternatively refer to multiple network transmit beams, multiple resource sets, multiple resource pools, multiple component carriers (CCs), or multiple cells. In other words, the foregoing concepts are equivalent.

In an implementation, the K1 first signals are from a terminal device. For details, refer to descriptions in the foregoing procedure.

In an implementation, frequency division multiplexing is used between the K1 first signals.

In an implementation, spatial division multiplexing is used between the K1 first signals.

In an implementation, intra-frequency multiplexing is used between the K1 first signals. To be specific, two signals are located at a same frequency, or parts of frequency locations of two signals overlap, or frequency locations of two signals may be the same.

In an implementation, one network device may indicate configuration information of the K1 first signals to the relay device, or each network device may indicate, to the relay device, configuration information of a first signal sent by the network device. The configuration information indicates information such as a transmit power, a time-frequency resource location, and a beam of the first signal. The configuration information of the first signal may be carried in any one of a PBCH, RMSI, a SIB1, a SIB2, a SIB3, a MAC-CE, DCI, RRC signaling, or system information.

In another implementation, Kx pieces of measurement information may be determined based on K1 signals, where Kx is different from K1. For example, one signal corresponds to two pieces of measurement information, and multiple pieces of measurement information may be obtained by receiving one signal for multiple times; or different ports of one signal are simultaneously sent by using multiple beams, and different beams correspond to different measurement values; or signals at different frequency locations are simultaneously sent, and signals at different frequency locations correspond to different measurement values. This manner may be applied to all embodiments of this specification. This implementation is also applicable to the method procedures in FIG. 4 to FIG. 8.

In this implementation, if the at least one network device includes a first network device and a second network device, the first network device and the second network device each correspond to one reference signal resource set, and each reference signal resource set includes at least one reference signal resource. Each network device may send the first signal by using a reference signal resource in the reference signal resource set.

In this implementation, if the relay device includes X1 relay backhaul side beams, the relay device may receive at least one first signal by using each relay backhaul side beam. In this case, K1 is greater than or equal to X1.

In another implementation, if the relay device includes X2 relay backhaul side beams, the relay device may receive at least one first signal by using some backhaul side beams. In this case, K1 is less than X2. To be specific, the relay device may select some proper beams (for example, X1 beams) to receive the K1 signals, to reduce a quantity of needed first signals. In the present invention, it may be considered that X1 backhaul side beams represent beams selected, for measurement, by the relay from X2 backhaul side beams, where X1 may be less than X2. This implementation is also applicable to the method procedures in FIG. 4 to FIG. 8.

For example, if a network device includes X3 beams, and the network device sends at least X1 first signals by using each beam, the network device sends at least X1*X3 first signals, and the relay device receives at least X3 first signals from the network device by using each of the X1 relay backhaul side beams.

In another implementation, one carrier is used for transmission of each of the K1 first signals, and the K1 first signals correspond to at least one carrier. For example, the K1 first signals correspond to K1 carriers, and one of the K1 carriers is used for transmission of each of the K1 first signals. The carrier may also be referred to as a component carrier (CC), and is referred to as a carrier for short in this application. The relay device may support M carriers, where M is greater than or equal to K1. For example, when this application is applied to the scenario of the multi-carrier transmission mode, this implementation may be applied.

In this implementation, the K1 first signals may be from one or more network devices. This is not limited in this application.

In this application, each of the K1 pieces of measurement information corresponds to one of the K1 first signals, in other words, one piece of measurement information is determined based on one first signal. For specific content of the measurement information, refer to descriptions in S402. Details are not described herein again.

In this application, the K1 pieces of measurement information may be divided into multiple groups, and each group includes at least one piece of measurement information. For example, measurement information included in each group of measurement information may be determined based on first signals sent by a same network device or TRPs of a same network device. For another example, measurement information included in each group of measurement information may be determined based on first signals received by the relay device by using a same beam. In an implementation, an example in which the measurement information is an RSRP and there are two TRPs is used. The K1 pieces of measurement information may be shown in Table 1.

Table 1

| Beam of the relay device | Measurement information corresponding to a TRP0 | Measurement information corresponding to a TRP1 |
| --- | --- | --- |
| Beam#0 | RS(0, 0), RSRP(0, 0) | RS(1, 0), RSRP(1, 0) |
| Beam#1 | RS(0, 1), RSRP(0, 1) | RS(1, 1), RSRP(1, 1) |
| ... | ... | ... |

RS(i, j) represents an index (or a resource index) of a first signal that is from a TRPi and that is received by the relay device by using a beam#j, the relay device receives the first signal by using the beam#j, RSRP(i, j) represents measurement information corresponding to the first signal, $i \in \{0, 1\}$, and $j \in \{0, 1, 2, ...\}$.

In an implementation, an example in which the measurement information is an RSRP is used. It is assumed that there are two TRPs, then the K1 pieces of measurement information may be shown in Table 2.

Table 2

| Beam of the relay device | Measurement information corresponding to an RS0 | Measurement information corresponding to an RS1 |
|---|---|---|
| Beam#0 | RSRP(0, 0) | RSRP(1, 0) |
| Beam#1 | RSRP(0, 1) | RSRP(1, 1) |
| ... | ... | ... |

RSi represents the first signal sent by the network device by using an $i^{th}$ TRP, RSRP(i, j) represents measurement information corresponding to the first signal that is from the RSi and that is received by the relay device by using a beam#j, $i \in \{0, 1\}$, and $j \in \{0, 1, 2, ...\}$.

In an implementation, an example in which the measurement information is an RSRP and there are two TRPs is used. The K1 pieces of measurement information may be shown in Table 3.

Table 3

| Beam of the relay device | Measurement information corresponding to a reference signal | Measurement information corresponding to a reference signal |
|---|---|---|
| | resource set 0 | resource set 1 |
| Beam#0 | RS(0, 0), RSRP(0, 0) | RS(1, 0), RSRP(1, 0) |
| Beam#1 | RS(0, 1), RSRP(0, 1) | RS(1, 1), RSRP(1, 1) |
| ... | ... | ... |

A network side may configure one reference signal resource set for each TRP. RS(i, j) represents an index (or a resource index) of a first signal that is from a reference signal resource set i and that is received by the relay device by using a beam#j, RSRP(i, j) represents measurement information corresponding to the first signal, $i \in \{0, 1\}$, and $j \in \{0, 1, 2, ...\}$.

In an implementation, an example in which the measurement information is an RSRP and there are two TRPs is used. The K1 pieces of measurement information may be shown in Table 4.

Table 4

| Measurement information group | Measurement information corresponding to a reference signal resource set 0 | Measurement information corresponding to a reference signal resource set 1 |
|---|---|---|
| Group#0 | RS(0, 0), RSRP(0, 0) | RS(1, 0), RSRP(1, 0) |
| Group# 1 | RS(0, 1), RSRP(0, 1) | RS(1, 1), RSRP(1, 1) |
| ... | ... | ... |

A network side may configure one reference signal resource set for each TRP. RS(i, j) represents an index (or a resource index) of a first signal that is from a reference signal resource set i and that is received by the relay device by using a beam#j, RSRP(i, j) represents measurement information corresponding to the first signal, $i \in \{0, 1\}$, and $j \in \{0, 1, 2, ...\}$. One group represents measurement information of multiple resources (or TRP signals) that can be simultaneously received by the relay device, that is, one group corresponds to one beam of the relay device.

In an implementation, an example in which the measurement information is an RSRP, and there are two TRPs is used. The K1 pieces of measurement information may be alternatively sorted based on magnitudes of the measurement information, for example, may be shown in Table 5.

Table 5

| Measurement information group | First group of measurement information | Second group of measurement information |
| --- | --- | --- |
| Group#0 | RSRP(0, 0) | RSRP(1, 0) |
| Group# 1 | RSRP(0, 1) | RSRP(1, 1) |
| ... | ... | ... |

A network side may configure one reference signal resource set for each TRP. Measurement information (namely, RSRP(0, 0)) corresponding to the group#0 and a first group of measurement results is a largest value of RSRPs of all first signals received by the relay device; measurement information (namely, RSRP(0, 0)) corresponding to the group#0 and a second group of measurement results is a second largest value of RSRPs of all the first signals received by the relay device; and so on. Alternatively, signals in a column corresponding to the first group of measurement information are signals that belong to a same reference signal resource set (or sent by a same TRP), and signals in a column corresponding to the second group of measurement information are signals that belong to another reference signal resource set (or sent by another TRP).

Optionally, in Table 1 to Table 5, measurement information in a same column may be sorted in descending order, or may be sorted in ascending order. This is not limited in this application.

In an implementation, an example in which the measurement information is an RSRP, and there are two TRPs is used. The K1 pieces of measurement information may be alternatively sorted based on magnitudes of the measurement information, for example, may be shown in Table 6.

Table 6

| Measurement information group | First group of measurement information | Second group of measurement information | General measurement information group |
| --- | --- | --- | --- |
| Group#0 | RSRP(0, 0) | RSRP(1, 0) | RSRP0 |
| Group#1 | RSRP(0, 1) | RSRP(1, 1) | RSRP1 |
| ... | ... | ... | ... |

The third column is the general measurement information group. For example, each piece of general measurement information in the general measurement information group is a sum of all measurement information in a row corresponding to the general measurement information. Table 6 is used as an example. A general measurement result may be $RSRPj = 10 \log_{10}(10^{RSRP(0,j)/10} + 10^{RSRP(1,j)/10})$, where $j \in \{ 0, 1, 2, ...\}$.

Optionally, in Table 1 to Table 4, one column of general measurement information group order may be added to each table in the manner in Table 6. This is not limited in this application.

In another implementation, measurement information in all tables in this application may satisfy a preset condition. For example, the measurement information is an RSRP, and a measured RSRP is greater than a threshold. The threshold may be preset, or may be determined by the relay based on configuration information of the network device, or may be configured by the network device.

In this application, in an implementation, for each network device, the relay device may send, to the network device, the measurement information determined based on a second signal sent by the network device. In another implementation, the relay device may send K1 pieces of measurement information to one of the at least one network device. The following uses this implementation as an example for description, and other cases may be deduced by analogy.

S1102: The relay device sends the K1 pieces of measurement information to the first network device.

If the K1 first signals are from the at least one network device, the first network device is one of the at least one network device.

How the relay device specifically sends the K1 pieces of measurement information is not limited in this application. In an implementation, the relay device directly reports each piece of measurement information to the first network device.

In an implementation, the relay device sends first measurement information and K1-1 pieces of relative measurement information to the first network device, where the first measurement information is one of the K1 pieces of measurement information, and each of the K1-1 pieces of relative measurement information is a difference between the first measurement information and one of the K1 pieces of measurement information except the first measurement information. In this way, the first network device may determine the K1 pieces of measurement information based on the K1-1 pieces of relative measurement information and the first measurement information. The first measurement information may be any one of the K1 pieces of measurement information. For example, the first measurement information may be largest measurement information in the K1 pieces of measurement information, or may be smallest measurement information in the K1 pieces of measurement information.

In an implementation, as described above, the relay device may divide the K1 pieces of measurement information into multiple groups. For each group of measurement information, the relay device sends one piece of first measurement information to the first network device. For other measurement information in each group of measurement information, the relay device sends relative measurement information of the measurement information, in other words, a difference between the measurement information and the first measurement information. For example, for Table 1, each row in Table 1 may be used as a group. The relay device reports a 1st piece of measurement information in each row to the first network device, and for another piece of measurement information in the row, the relay device reports a difference between the measurement information and first measurement information in each row.

In this application, a quantization step of the first measurement information reported by the relay device may be different from a quantization step of the relative measurement information. For example, the quantization step of the first measurement information is 2 dB, and the quantization step of the relative measurement information is 1 dB (or 0.5 dB). The relative measurement information is reported by using a small quantization step, so that the measurement information can be reported more accurately, to facilitate subsequent gain/power control.

In this application, the relay device may report only some of the K1 pieces of measurement information. For example, in a reporting manner 1, the relay device divides the K1 pieces of measurement information into multiple groups, and the relay device may report only one or more groups of measurement information. For example, if the K1 pieces of measurement information are divided in the manner in any one of Table 1 to Table 6, each column of measurement information is grouped into one group, and the relay device may report only one or more columns of measurement information.

In a reporting manner 2, if the relay device determines K3 pieces of general measurement information based on the K1 pieces of measurement information, for example, one piece of general measurement information is a sum of one or more pieces of measurement information, and the relay device may send the K3 pieces of general measurement information to the first network device. For example, with reference to Table 6, the relay device may send the general measurement information in the general measurement information group. In this case, the relay device may not send the K1 pieces of measurement information.

In a reporting manner 3, the relay device divides the K1 pieces of measurement information into multiple groups, and the relay device may report only one or more pieces of measurement information in each group of measurement information. For example, with reference to Table 6, each column of measurement information is grouped into one group, and the relay device may send at least one piece of measurement information in a 2nd column, at least one piece of measurement information in a 3rd column, and at least one piece of measurement information in a 4th column.

How the relay device reports the measurement information may be determined based on indication information of the first network device. For example, the first network device sends measurement reporting indication information to the relay device, where the measurement reporting indication information indicates the relay device to report the measurement information in at least one of the reporting manner 1, the reporting manner 2, or the reporting manner 3. The measurement reporting indication information may further indicate a quantity of pieces of measurement information reported by the relay device, or the measurement reporting indication information may further indicate a quantity of pieces of measurement information reported by the relay device in each reporting manner.

Further, when reporting is performed in the reporting manner 1 and the reporting manner 2, measurement information that may be reported is the same. Therefore, only one of the reporting manners may be used. For example, the measurement information is reported only in the reporting manner 1, or the measurement information is reported only in the reporting manner 2.

S1103: The first network device determines K2 pieces of first forwarding power information based on the K1 pieces of measurement information, and sends the K2 pieces of first forwarding power information to the relay device.

In this application, each of the K2 pieces of first forwarding power information is determined based on at least one piece of measurement information, and K2 is greater than or equal to K1.

Implementation 1: One piece of first forwarding power information is determined based on one piece of measurement information.

In an implementation, for each of the K1 first signals, measurement information corresponding to the first signal includes a receive power of the first signal. In this case, first forwarding power information corresponding to an $i^{th}$ first signal in the K1 first signals satisfies any one of the following forms:

$$P_{Txi} = P_{Rxi} + Gi;$$

$$P_{Txi} = P_{Rxi} + Gi + 10 \log_{10} W;$$

or

$$P_{Txi} = P_{Rxi} + Gi + 10 \log_{10} W + 10 \log_{10} Por,$$

where

$P_{Txi}$ represents a preconfigured forwarding power of the $i^{th}$ first signal, the forwarding power may be configured by the first network device or any network device, or may be configured by a network device that sends the first signal, and $i \in \{0, 1, 2, ...\}$; $P_{Rxi}$ represents a receive power of the $i^{th}$ first signal, Gi represents the first forwarding power information corresponding to the $i^{th}$ first signal, W represents a bandwidth corresponding to the $i^{th}$ first signal, and Por represents a quantity of ports corresponding to the $i^{th}$ first signal.

In an implementation, for each of the K1 first signals, measurement information corresponding to the first signal includes a path loss and a receive power of the first signal. In this case, first forwarding power information corresponding to an $i^{th}$ first signal in the K1 first signals satisfies the following form:

$$Gi = P_{0i} + PLi - P_{Rxi},$$

where

$P_{0i}$ represents a preconfigured target receive power of the $i^{th}$ first signal, the target receive power may be configured by the first network device or any network device, or may be configured by a network device that sends the first signal, and $i \in \{0, 1, 2, ...\}$; $P_{Rxi}$ represents a receive power of the $i^{th}$ first signal, Gi represents the first forwarding power information corresponding to the $i^{th}$ first signal, and PLi represents the path loss of the $i^{th}$ first signal.

Implementation 2: One piece of first forwarding power information is determined based on multiple pieces of measurement information.

The following uses an example in which one piece of first forwarding power information is determined based on two pieces of measurement information. Other cases may be deduced by analogy, and details are not described again. It is assumed that the first forwarding power information is determined based on measurement information 1 and measurement information 2, and a first signal corresponding to the measurement information 1 and a first signal corresponding to the measurement information 2 are from different network devices, or the first signal corresponding to the measurement information 1 and the first signal corresponding to the measurement information 2 are from a same network device but are from different TRPs.

According to the method in Implementation 1, if forwarding power information 1 is determined based on the measurement information 1, and forwarding power information 2 is determined based on the measurement information 2, the first forwarding power information determined based on the measurement information 1 and the measurement information 2 may be determined based on the forwarding power information 1 and the forwarding power information 2. For example, the first forwarding power information satisfies the following form:

$$G = \max(a0 \times G0 + b0,\ a1 \times G1 + b1) \text{ or } G = \min(a0 \times G0 + b0,\ a1 \times G1 + b1).$$

For another example, the first forwarding power information satisfies any one of the following forms:

$$G = a0 \times G0 + a1 \times G1;$$

$$G = 10 \times \log_{10}\big(10^{G0/10} + 10^{G1/10}\big);$$

or

$$G = 10 \times \log_{10}\big(a0 \times 10^{G0/10} + a1 \times 10^{G1/10}\big),$$

where

G represents the first forwarding power information, G0 represents the forwarding power information 1, G1 represents the forwarding power information 2, max() represents an operation of obtaining a largest value, and min() represents an operation of obtaining a smallest value; and weighting factors a0 and a1 and offset factors b0 and b1 may be predefined, or may be configured by the network device. Further, the weighting factors a0 and a1 and the offset factors b0 and b1 may reflect differences between scheduling bandwidths or signal priorities of different first signals.

**In** an implementation, the relay device receives, by using different beams, the first signal corresponding to the measurement information 1 and the first signal corresponding to the measurement information 2, or the relay device receives, by using a same beam, the first signal corresponding to the measurement information 1 and the first signal corresponding to the measurement information 2.

**In** an implementation, the first signal corresponding to the measurement information 1 and the first signal corresponding to the measurement information 2 are simultaneously scheduled by the first network device.

**In** an implementation, frequency division multiplexing is used between the first signal corresponding to the measurement information 1 and the first signal corresponding to the measurement information 2.

**In** an implementation, spatial division multiplexing is used between the first signal corresponding to the measurement information 1 and the first signal corresponding to the measurement information 2.

**In** an implementation, intra-frequency multiplexing is used between the first signal corresponding to the measurement information 1 and the first signal corresponding to the measurement information 2. To be specific, two signals are located at a same frequency, or parts of frequency locations of two signals overlap, or frequency locations of two signals may be the same.

In this application, after the K2 pieces of first forwarding power information are determined based on the K1 pieces of measurement information, a correspondence between at least two of the first forwarding power information, the first signal, a beam used by the relay device to receive the first signal, and a beam used by the network device to send the first signal may be determined. For example, the foregoing correspondence may be shown in Table. 7.

Table 7

| Index | First signal | Beam used by the relay device to receive the first signal | Beam used by the network device to send the first signal | First forwarding power information |
|---|---|---|---|---|
| 0 | RS0_0 | Beam#0 | Beam#A | G0 |
| 1 | RS1_1 | Beam#1 | Beam#B | G1 |
| 2 | RS0_0, RS1_0 | Beam#0 | Beam#A, beam#B | G2 |
| ... | ... | ... | ... | ... |

Rsi-j represents an index (or a resource index) of a first signal that is from a network device i and that is received by the relay device by using a beam#j, where the relay device receives the first signal by using the beam#j, RSRP(i, j) represents measurement information corresponding to the first signal, i∈{0, 1, 2, ...}, and j∈{0, 1, 2, ...}.

When sending the K2 pieces of first forwarding power information to the relay device, the first network device may also send some or all of the correspondences to the relay device. For example, the first network device indicates at least one of a first signal corresponding to each piece of first forwarding power information, a beam for receiving the first signal, or a beam for sending the first signal.

The first network device may send the K2 pieces of first forwarding power information by using RRC signaling, or may send the K2 pieces of first forwarding power information in another manner. This is not limited in this application.

In this application, the first network device may further update the K2 pieces of first forwarding power information, for example, update values of one or more of the K2 pieces of first forwarding power information. The first network device may send the updated one or more pieces of first forwarding power information by using a MAC CE, or may update the information in another manner. This is not limited in this application.

In a possible implementation, the first network device may further send first information to the relay device, where the first information indicates a power offset value. For example, the first information may specifically indicate the relay device to forward a signal based on the power offset value in a slot k. DCI may be used for transmission of the first information. This is not limited in this application.

In a possible implementation, the first network device may further send second information to the relay device, where the second information indicates a power offset value corresponding to each of the K2 pieces of first forwarding power information. For example, with reference to Table 7, a correspondence between the first forwarding power information and the power offset value may be shown in Table. 8.

Table 8

| Index | First signal | Beam used by the relay device to receive the first signal | Beam used by the network device to send the first signal | First forwarding power information | Power offset value |
|---|---|---|---|---|---|
| 0 | RS0_0 | Beam#0 | Beam#A | G0 | Δ0 |
| 1 | RS1_1 | Beam#1 | Beam#B | G1 | Δ1 |
| 2 | RS0_0, RS1_0 | Beam#0 | Beam#A, beam#B | G2 | Δ2 |
| ... | ... | ... | ... | ... | ... |

In a possible implementation, the power offset value may correspond to one signal type, and the signal type includes, but is not limited to, a broadcast signal, a data signal, a control signal, and the like. When forwarding a signal, the relay device may determine, based on a signal type of the signal to be forwarded, whether to use the power offset value. For example, the power offset value corresponds to a broadcast signal, and the broadcast signal includes, but is not limited to, an SSB, a PRACH, and a SIB1. When forwarding the broadcast signal, the relay device forwards the broadcast signal based on the first forwarding power information and the power offset value corresponding to the first forwarding power information. When forwarding a data signal or a control signal, the relay device forwards the data signal or the control signal based on the first forwarding power information.

In this application, alternatively, the relay device may determine the K2 pieces of first forwarding power information. In this case, S1102 and S1103 may not be performed, but the relay device determines the K2 pieces of first forwarding power information according to the method described in S1103. A specific process is not described again.

S1104: The relay device receives a second signal from the first network device, and forwards the second signal to a terminal device based on second forwarding power information.

Optionally, S1105: The relay device receives a third signal from the second network device, and forwards the third signal to a terminal device based on third forwarding power information.

If the K1 first signals are from the at least one network device, the second network device is one of the at least one network device.

The second forwarding power information and the third forwarding power information are forwarding power information in the K2 pieces of first forwarding power information. The terminal device in S1104 and the terminal device in S1105 may be the same terminal device, or may be different terminal devices. This is not limited in this application.

There may be the following two cases for a relationship between the second forwarding power information and the third forwarding power information:

Case 1: There is an association between the second forwarding power information used by the relay device to forward the second signal and the third forwarding power information used by the relay device to forward the third signal. For example, the second forwarding power information and the third forwarding power information are equal (or are same forwarding power information), and the second forwarding power information or the third forwarding power information is determined based on measurement information corresponding to a first signal from the first network device and measurement information corresponding to a first signal from the second network device.

In the case 1, it is assumed that the measurement information corresponding to the first signal from the first network device is measurement information 1, and the measurement information corresponding to the first signal from the second network device is measurement information 2. In this case, the second forwarding power information or the third forwarding power information satisfies any one of the following forms:

$$G=\max(a0 \times G0+b0,\ a1 \times G1+b1);\ G=\min(a0 \times G0+b0,\ a1 \times G1+b1);$$

$$G=a0 \times G0+a1 \times G1;$$

$$G = 10 \times \log_{10}\left(10^{G0/10} + 10^{G1/10}\right);$$

or

$$G = 10 \times \log_{10}\left(a0 \times 10^{G0/10} + a1 \times 10^{G1/10}\right),$$

where

G represents the second forwarding power information of the third forwarding power information, G0 represents the forwarding power information 1 determined based on the measurement information 1, G1 represents the forwarding power information 2 determined based on the measurement information 2, max() represents an operation of obtaining a largest value, and min() represents an operation of obtaining a smallest value; and weighting factors a0 and a1 and offset factors b0 and b1 may be predefined, or may be configured by the network device.

For a manner of determining G0 and G1, refer to descriptions in S1102. Details are not described herein again.

In an implementation, the second forwarding power information or the third forwarding power information has an association relationship with at least one of the following: a beam used by the relay device to receive the second signal, which may be referred to as a beam 1; a beam used by the relay device to forward the second signal, which may be referred to as a beam 2; a beam used by the first network device to send the second signal, which may be referred to as a beam 3; a beam used by the relay device to receive the third signal, which may be referred to as a beam 4; a beam used by the relay device to forward the third signal, which may be referred to as a beam 5; or a beam used by the second network device to send the third signal, which may be referred to as a beam 6.

For example, it is assumed that the first signal from the first network device is referred to as a signal 1, measurement information determined based on the signal 1 is measurement information 1, and forwarding power information determined based on the measurement information 1 is forwarding power information 1; the first signal from the second network device is referred to as a signal 2, measurement information determined based on the signal 2 is measurement information 2, and forwarding power information determined based on the measurement information 2 is forwarding power information 2. If the second forwarding power information or the third forwarding power information is determined based on the forwarding power information 1 and the forwarding power information 2, the signal 1 may satisfy at least one of the following:

The relay device receives the signal 1 by using the beam 1; the relay device receives the signal 1 by using a beam corresponding to the beam 2, where the beam corresponding to the beam 2 is pre-agreed on; or the first network device sends the signal 1 by using the beam 3.

Correspondingly, the signal 2 satisfies at least one of the following: The relay device receives the signal 2 by using the beam 4; the relay device receives the signal 2 by using a beam corresponding to the beam 5, where the beam corresponding to the beam 5 is pre-agreed on; or the second network device sends the signal 2 by using the beam 6.

In an implementation, it is assumed that the first network device sends multiple first signals, and the second network device also sends multiple first signals. The measurement information 1 and the measurement information 2 are optimal measurement results obtained based on the multiple first signals of the first network device and the multiple first signals of the second network device.

Case 2: The second forwarding power information used by the relay device to forward the second signal and the third forwarding power information used to forward the third signal are independent of each other. To be specific, the second forwarding power information is determined based on the measurement information corresponding to the first signal from the first network device, and the third forwarding power information is determined based on the measurement information corresponding to the first signal from the second network device.

If the second forwarding power information and the third forwarding power information are independent of each other, the following separately describes how to determine the second forwarding power information. The following descriptions are also applicable to the third forwarding power information, and details are not described again subsequently.

In an implementation, the relay device receives the second signal by using a relay backhaul side beam, and forwards the second signal by using a relay access side beam. The relay backhaul side beam used by the relay device to receive the second signal and/or the relay access side beam used by the relay device to forward the second signal may be configured by the network device, or may be determined by the relay device. This is not limited in this application. If the relay backhaul side beam and/or the relay access side beam are/is configured by the network device, the network device may indicate, by using control information, the relay backhaul side beam used by the relay device to receive the second signal and the relay access side beam used by the relay device to forward the second signal. The foregoing descriptions are also applicable to the third signal, and details are not described herein again.

When the relay device receives the second signal, there may be multiple implementations of how the relay device determines one piece of first forwarding power information from the K2 pieces of first forwarding power information as the second forwarding power information. This is not limited in this application.

In an implementation, the relay device uses, as the second forwarding power information, first forwarding power information that is in the K2 pieces of first forwarding power information and that is determined based on the measurement information corresponding to the first signal from the first network device. That is, the second forwarding power information is determined in the K2 pieces of first forwarding power information based on the measurement information corresponding to the first signal from the first network device. For example, the measurement information corresponding to the second forwarding power information may be a largest value of multiple pieces of measurement information corresponding to multiple first signals from the first network device.

In an implementation, there is an association relationship between the second forwarding power information used by the relay device to forward the second signal and at least one of a beam used by the relay device to receive the second signal, a beam used by the relay device to forward the second signal, a beam used by the first network device to send the second signal, or a beam used by the first network device to send the first signal.

For example, if the relay device receives the second signal by using a first beam, and the relay device forwards the second signal by using a second beam, the relay device determines, based on the first beam, one piece of first forwarding power information from the K2 pieces of first forwarding power information as the second forwarding power information. Specifically, the relay device uses, as the second forwarding power information, first forwarding power information that is in the K2 pieces of first forwarding power information and that is determined based on measurement information corresponding to a specific first signal, where the specific first signal is from the first network device, and the specific first signal satisfies at least one of the following: The relay device receives the first signal by using the first beam; or the relay device receives the first signal by using a beam corresponding to the second beam, where the beam corresponding to the second beam is pre-agreed on.

For another example, a correspondence between a relay backhaul side beam and a relay access side beam of the relay device may be established in advance. If the relay device sends the second signal by using a first beam (in this case, the first beam is a relay access side beam), the relay device uses, as the second forwarding power information, first forwarding power information that is in the K2 pieces of first forwarding power information and that is determined based on measurement information corresponding to a first signal received by using a second beam, where the second beam is a relay backhaul side beam, and the second beam has a correspondence with the first beam.

For another example, if the network device sends the second signal by using a third beam, and the relay device forwards the second signal by using a second beam, the relay device determines, based on the third beam and/or the second beam, one piece of first forwarding power information from the K2 pieces of first forwarding power information as the second forwarding power information. Specifically, the relay device uses, as the second forwarding power information, first forwarding power information that is in the K2 pieces of first forwarding power information and that is determined based on measurement information corresponding to a specific first signal, where the specific first signal is from the first network device, and the specific first signal satisfies at least one of the following: The network device sends the first signal by using the third beam; or the relay device receives the first signal by using a beam corresponding to the second beam, where the beam corresponding to the second beam is pre-agreed on.

For example, the network device sends the first signal by using two reference signal resource sets (a first reference signal resource set and a second reference signal resource set), each reference signal set corresponds to one TRP, and quantities of reference signal resources included in the two reference signal resource sets may be the same or may be different. The following uses an example in which either of the two reference signal resource sets includes X reference signal resources for description, and this does not represent a limitation on the quantity of resources included in the reference signal resource set.

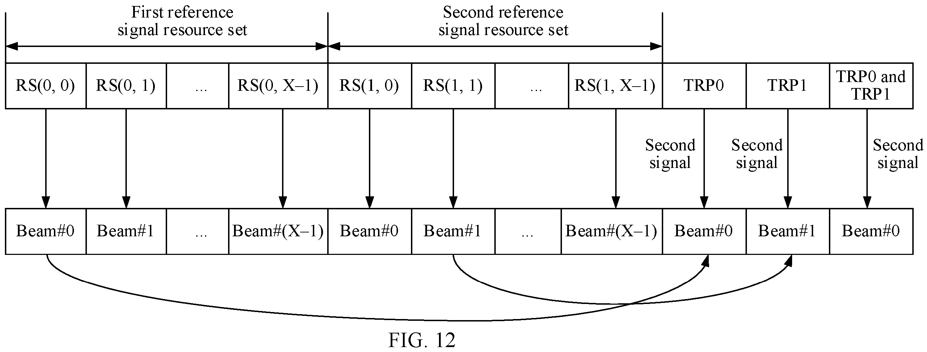

As shown in FIG. 12, X first signals sent by the first network device in a time sequence by using only the first reference signal resource set are respectively an RS(0, 0), an RS(0, 1), an RS(0, 2), ..., and an RS(0, X-1); and the relay device receives the X first signals by using a beam#0 to a beam#(X-1) respectively. It is assumed that in X pieces of measurement information obtained by the relay device based on the X first signals, measurement information corresponding to the RS(0, 0) is the largest, and the RS(0, 0) corresponds to the beam#0 of the relay device.

X first signals sent by the second network device in a time sequence by using only the second reference signal resource set are respectively an RS(1, 0), an RS(1, 1), an RS(1, 2), ..., and an RS(1, X-1); and the relay device receives the X first signals by using a beam#0 to a beam#(X-1) respectively. It is assumed that in X pieces of measurement information obtained by the relay device based on the X first signals, measurement information corresponding to the RS(1, 1) is the largest, and the RS(1, 1) corresponds to the beam#1 of the relay device. It is assumed that when the network device sends the foregoing 2X first signals by using both the first reference signal set and the second reference signal resource set, measurement information obtained by the relay device based on the RS(0, 0) and the RS(1, 0) is the largest, and the RS(0, 0) and the RS(1, 0) correspond to the beam#0 of the relay device (actually, the beam may be a beam other than the beam#0 and the beam#1, and this is not limited).

For another example, it is assumed that when the first network device sends the foregoing 2X first signals by using both the first reference signal set and the second reference signal resource set, measurement information obtained by the relay device based on the RS(0, 0) and the RS(0, 1) is the largest, and the RS(0, 0) and the RS(0, 1) correspond to the beam#2 of the relay device (actually, the beam may be any beam in the beam#0 to the beam#(X-1), and this is not limited).

It should be understood that, the beam#0, the beam#1, the RS(0, 0), and the RS(1, 1) are merely examples, and the beam and the reference signal need to be determined based on an actual measurement result.

In another implementation, the beam#0, the beam#1, the RS(0, 0), and the RS(1, 1) may be determined based on a preset condition. For example, it is only required that signal quality measured by the relay device exceed a threshold. The threshold may be preset, or may be determined based on network control information.

When the second signal received by the relay device is from a TRP0 of the first network device, if the relay device receives the second signal by using the beam#0, further, the relay device may use first forwarding power information determined based on the measurement information corresponding to the RS(0, 0) (or the RS(0, 1)) as the second forwarding power information, to forward the second signal based on the second forwarding power information.

Similarly, when the second signal received by the relay device is from a TRP1 of the first network device, the relay device receives the second signal by using the beam#1. The relay device may use first forwarding power information determined based on the measurement information corresponding to the RS(1, 1) (or the RS(1, 1)) as the second forwarding power information, to forward the second signal based on the second forwarding power information.

When second signals received by the relay device are from the TRP0 and the TRP1 of the network device, in other words, the network device simultaneously sends two second signals by using the TRP0 and the TRP1 respectively, if the relay device receives the second signals by using the beam#0 (or in other words, the second signal are sent by using the two TRPs simultaneously), the relay device may use, as the second forwarding power information, first forwarding power information determined based on the measurement information corresponding to the RS(0, 0) (or the RS(0, 0)) and measurement information corresponding to the RS(1, 0) (or the RS(1, 0)), to forward the second signal based on the second forwarding power information.

When second signals received by the relay device are from the TRP0 and the TRP1 of the network device, in other words, the network device simultaneously sends two second signals by using the TRP0 and the TRP1 respectively, if the relay device receives the second signals by using the beam#2, the relay device may use, as the second forwarding power information, first forwarding power information determined based on measurement information corresponding to the RS(0, 2) (or the RS(0, 2)) and measurement information corresponding to the RS(1, 2) (or the RS(1, 2)), to forward the second signal based on the second forwarding power information.

In an implementation, if the relay device forwards the second signal by using a first beam, receives the second signal by using a second beam, and the first network device sends the second signal by using a third beam, the relay device uses, as the second forwarding power information, first forwarding power information that is in the K2 pieces of first forwarding power information and that is determined based on measurement information corresponding to a specific first signal, where the specific first signal is from the first network device, and the specific first signal satisfies at least one of the following: The relay device receives the first signal by using the second beam; the first network device sends the first signal by using the third beam; or the relay device receives the first signal by using a beam corresponding to the first beam, where the beam corresponding to the first beam is pre-agreed on.

For example, the network device sends the first signal by using two reference signal resource sets (a first reference signal resource set and a second reference signal resource set), each reference signal set corresponds to one TRP, and quantities of reference signal resources included in the two reference signal resource sets may be the same or may be different. The following uses an example in which either of the two reference signal resource sets includes X reference signal resources for description, and this does not represent a limitation on the quantity of resources included in the reference signal resource set.

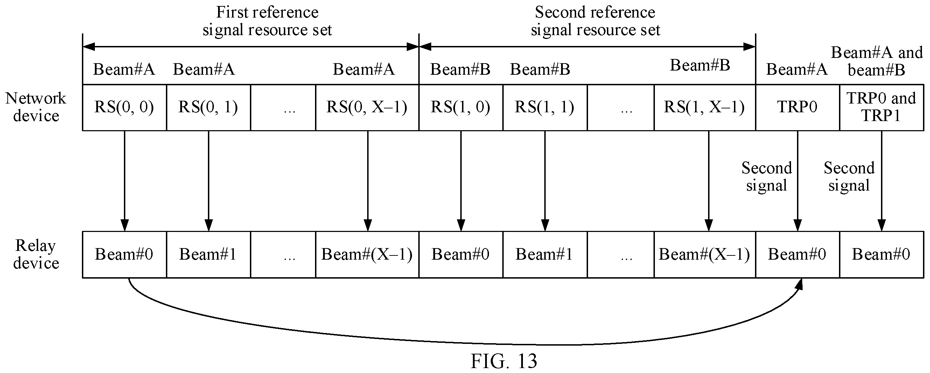

As shown in FIG. 13, the network device includes Y beams in total. It is assumed that Y=2. The network device includes a beam#A and a beam#B. For a case in which a value of Y is greater than 2, refer to the descriptions herein. Details are not described herein again. X first signals sent by the network device in a time sequence by using each beam and using the first reference signal resource set are respectively an RS(0, 0), an RS(0, 1), an RS(0, 2), ..., and an RS(0, X-1); and for the X first signals sent by using each beam, the relay device receives the X first signals by using a beam#0 to a beam#(X-1) respectively. By analogy, the network device sends Y reference signal resource sets, and there are XY first signals in total. It is assumed that in XY pieces of measurement information obtained by the relay device based on the XY first signals, measurement information corresponding to a first signal corresponding to the beam#0 of the relay device and the beam#A of the network device is the largest.

X first signals sent by the network device in a time sequence by using each beam and using the second reference signal resource set are respectively an RS(1, 0), an RS(1, 1), an RS(1, 2), ..., and an RS(1, X-1); and for the X first signals sent by using each beam of the network device, the relay device receives the X first signals by using the beam#0 to the beam#(X-1) respectively. It is assumed that in XY pieces of measurement information obtained by the relay device based on the XY first signals, measurement information corresponding to a first signal corresponding to the beam#1 of the relay device and the beam#B of the network device is the largest.

It is assumed that when the network device sends the first signal by using both the beamA and the beamB, measurement information obtained by the relay device based on the beam#0 is the largest. When the second signal received by the relay device is from the TRP0 of the network device, if the relay device receives the second signal by using the beam#0, and if the network device sends the second signal by using the beam#A, the relay device may use, as the second forwarding power information, first forwarding power information determined based on measurement information corresponding to a first signal corresponding to the beam#0 of the relay device and the beam#A of the network device, to forward the second signal based on the second forwarding power information.

When second signals received by the relay device are from the TRP0 and the TRP1 of the first network device, in other words, the first network device sends two second signals (or in other words, the second signals are simultaneously sent by using the two TRPs), and the two second signals are sent by using the TRP0 and the TRP1 respectively, if the relay device receives the second signals by using the beam#0, and if the first network device sends the second signals by using the beam#A and the beam#B, the relay device may use, as the second forwarding power information, first forwarding power information determined based on measurement information corresponding to a first signal corresponding to the beam#0 of the relay device and the beam#A of the first network device and measurement information corresponding to a first signal corresponding to the beam#0 of the relay device and the beam#B of the first network device, to forward the second signal based on the second forwarding power information.

When this application is applied to the scenario of the multi-carrier transmission mode, measurement information of K1 first signals in K1 carriers may be used to forward signals in Q carriers, where K1 is less than or equal to Q, and Q is a maximum quantity of carriers supported by the relay device. Specifically, the relay device may determine the second forwarding power information based on a quantity of carriers occupied by the second signal and K1 pieces of first forwarding power information.

Implementation 1: The second forwarding power information satisfies the following form:

$$G = G1 + 10 \times \log_{10}(C/K1) \text{ or } G2 = G1 - 10 \times \log_{10}(C/K1),$$

where

G1 represents the first forwarding power information determined based on the first signal, G represents the second forwarding power information, and C represents the quantity of carriers occupied by the second signal.

Implementation 2: There is a preset correspondence between the K1 pieces of first forwarding power information and the Q carriers. The correspondence may be preset, or may be configured by the first network device.

For example, indexes of the K pieces of first forwarding power information are respectively {PC#(0), PC#(1), ..., PC#(K1-1)}, indexes of the Q carriers are respectively {c_0, c_1, ..., c_(Q-1)}, and a correspondence between the K1 pieces of first forwarding power information and the Q carriers may be shown in Table. 9.

Table 9

| Carrier | First forwarding power information |
|---------|-----------------------------------|
| c_0 | $PC\#(K_0)$ |
| c_1 | $PC\#(K_1)$ |
| ... | ... |
| c_(Q-1) | $PC\#(K_{Q-1})$ |

One piece of first forwarding power information may correspond to one or more carriers, $0 \leq K_q \leq K1-1$, and $0 \leq q \leq Q-1$.

When the second signal forwarded by the relay device occupies one carrier, the second forwarding power information for forwarding the second signal may be determined based on the correspondence between the K1 pieces of first forwarding power information and the Q carriers, that is, first forwarding power information corresponding to the carrier occupied by the second signal is used as the second forwarding power information.

When the second signal forwarded by the relay device occupies multiple carriers, the second forwarding power information used by the relay device to forward the second signal satisfies the following form:

$$G = 10 \times log_{10}\left(\sum_{i=1}^{C} 10^{Gi/10}\right),$$

where

G represents the second forwarding power information, C represents a quantity of carriers occupied by the second signal, and Gi represents first forwarding power information corresponding to an $i^{th}$ carrier occupied by the second signal.

For example, indexes of carriers occupied by the second signal are {0, 1, 2}, and first forwarding power information corresponding to the carriers is G0, G1, and G2 respectively. Then, the second forwarding power information may be: $G = 10 \times \log_{10}(10^{G0/10} + 10^{G1/10} + 10^{G2/10})$.

When this application is applied to the scenario of the multi-carrier transmission mode, there is an association relationship between the second forwarding power information used by the relay device to forward the second signal and at least one of a beam used by the relay device to receive the second signal or a beam used by the relay device to forward the second signal.

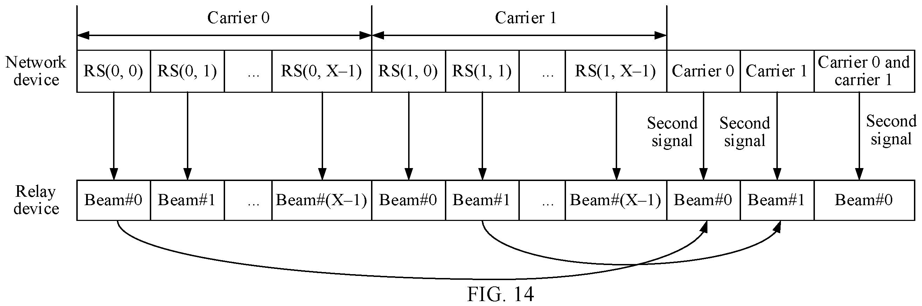

For example, the first network device sends first signals by using two carriers (a carrier 0 and a carrier 1). Quantities of first signals sent by the first network device by using the two carriers may be the same or may be different. The following uses an example in which the quantities of first signals sent by using the two carriers are the same for description, and this does not represent a limitation on the quantities of first signals. As shown in FIG. 14, X first signals sent by the first network device in a time sequence by using the carrier 0 are respectively an RS(0, 0), an RS(0, 1), an RS(0, 2), ..., and an RS(0, X-1); and the relay device receives the X first signals by using a beam#0 to a beam#(X-1) respectively. It is assumed that in X pieces of measurement information obtained by the relay device based on the X first signals, measurement information corresponding to the RS(0, 0) is the largest, and the RS(0, 0) corresponds to the beam#0 of the relay device.

X first signals sent by the first network device in a time sequence by using the carrier 1 are respectively an RS(1, 0), an RS(1, 1), an RS(1, 2), ..., and an RS(1, X-1); and the relay device receives the X first signals by using a beam#0 to a beam#(X-1) respectively. It is assumed that in X pieces of measurement information obtained by the relay device based on the X first signals, measurement information corresponding to the RS(1, 1) is the largest, and the RS(1, 1) corresponds to the beam#1 of the relay device.

It is assumed that when the first network device sends the foregoing 2X first signals by using both the carrier 0 and the carrier 1, measurement information obtained by the relay device based on the RS(0, 0) and the RS(1, 0) is the largest, and the RS(0, 0) and the RS(1, 0) correspond to the beam#0 of the relay device.

When the second signal received by the relay device corresponds to the carrier 0, the relay device may forward the second signal by using the beam#0. Further, the relay device may use first forwarding power information determined based on the measurement information corresponding to the RS(0, 0) as the second forwarding power information, to forward the second signal based on the second forwarding power information.

Similarly, when the second signal received by the relay device corresponds to the carrier 1, if the relay device forwards the second signal by using the beam#1, the relay device may use first forwarding power information determined based on the measurement information corresponding to the RS(1, 1) as the second forwarding power information, to forward the second signal based on the second forwarding power information.

When second signals received by the relay device correspond to the carrier 0 and the carrier 1, in other words, the first network device sends two second signals by using the carrier 0 and the carrier 1 respectively, if the relay device receives the second signals by using the beam#0, the relay device may use, as the second forwarding power information, first forwarding power information determined based on measurement information corresponding to the RS(0, 0) and measurement information corresponding to the RS(1, 0), to forward the second signal based on the second forwarding power information.

When this application is applied to the scenario of the multi-carrier transmission mode, there may further be an association relationship between the second forwarding power information used by the relay device to forward the second signal and at least one of a beam used by the relay device to receive the second signal, a beam used by the relay device to forward the second signal, or a beam used by the first network device to send the second signal.

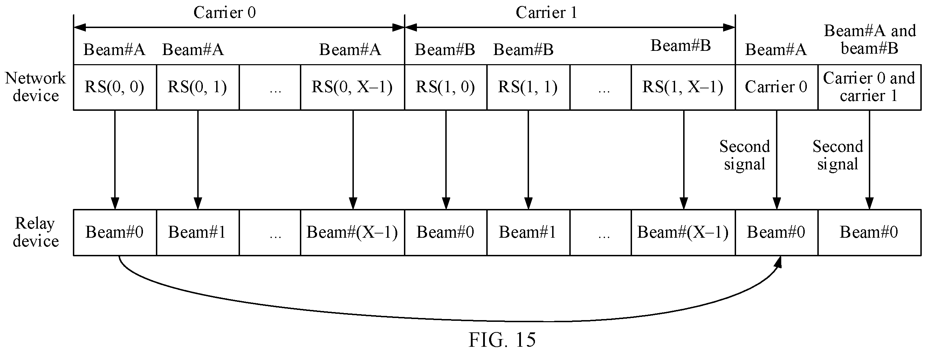

For example, the first network device sends first signals by using two carriers (a carrier 0 and a carrier 1). Quantities of first signals sent by the first network device by using the two carriers may be the same or may be different. The following uses an example in which the quantities of first signals sent by using the two carriers are the same for description, and this does not represent a limitation on the quantities of first signals. As shown in FIG. 15, the first network device includes Y beams in total. X first signals sent by the first network device in a time sequence by using each beam and using the carrier 0 are respectively an RS(0, 0), an RS(0, 1), an RS(0, 2), ..., ·and an RS(0, X-1); and for the X first signals sent by using each beam of the first network device, the relay device receives the X first signals by using a beam#0 to a beam#(X-1) respectively. It is assumed that in XY pieces of measurement information obtained by the relay device based on the XY first signals, measurement information corresponding to a first signal corresponding to the beam#0 of the relay device and the beam#A of the first network device is the largest.

X first signals sent by the first network device in a time sequence by using each beam and using the carrier 1 are respectively an RS(1, 0), an RS(1, 1), an RS(1, 2), ..., and an RS(1, X-1); and for the X first signals sent by using each beam of the first network device, the relay device receives the X first signals by using a beam#0 to a beam#(X-1) respectively. It is assumed that in XY pieces of measurement information obtained by the relay device based on the XY first signals, measurement information corresponding to a first signal corresponding to the beam#0 of the relay device and the beam#B of the first network device is the largest.

It is assumed that when the first network device sends the foregoing 2XY first signals by using both the carrier 0 and the carrier 1, in the 2XY pieces of measurement information obtained by the relay device, measurement information obtained based on the RS(0, 0) and the RS(1, 0) is the largest, where the RS(0, 0) corresponds to the beam#0 of the relay device and corresponds to the beam#A of the first network device, and the RS(1, 0) corresponds to the beam#0 of the relay device and corresponds to the beam#B of the first network device.

When the second signal received by the relay device corresponds to the carrier 0, if the relay device receives the second signal by using the beam#0, and if the first network device sends the second signal by using the beam#A, the relay device may use, as the second forwarding power information, first forwarding power information determined based on measurement information corresponding to a first signal corresponding to the beam#0 of the relay device and the beam#A of the first network device, to forward the second signal based on the second forwarding power information.

When second signals received by the relay device correspond to the carrier 0 and the carrier 1, in other words, the first network device sends two second signals by using the carrier 0 and the carrier 1 respectively, if the relay device receives the second signals by using the beam#0, and further, if the first network device sends the second signals by using the beam#A and the beam#B, the relay device may use, as the second forwarding power information, first forwarding power information determined based on measurement information corresponding to a first signal corresponding to the beam#0 of the relay device and the beam#A of the first network device and measurement information corresponding to a first signal corresponding to the beam#0 of the relay device and the beam#B of the first network device, to forward the second signal based on the second forwarding power information.

S1106: The relay device receives a fourth signal from the terminal device, and forwards the fourth signal to the first network device based on fourth forwarding power information, where the fourth forwarding power information is one of the K2 pieces of first forwarding power information.

In this application, a process in which the relay device forwards the fourth signal may be similar to a process in which the relay device forwards the second signal. For example, a manner of determining the fourth forwarding power information may be the same as the manner of determining the second forwarding power information. For details, refer to descriptions in S1104. Details are not described herein again.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into the modules is used as an example, and is merely logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

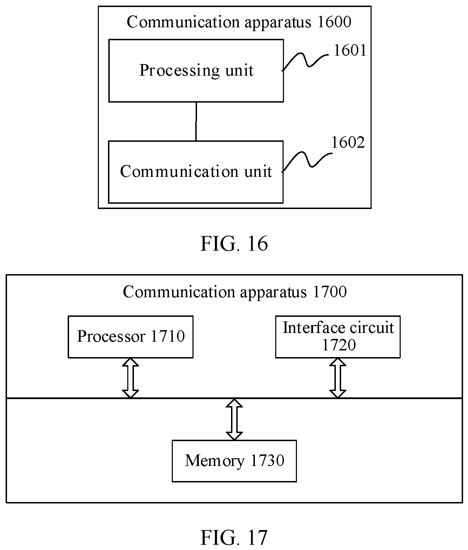

Same as the foregoing concept, as shown in FIG. 16, an embodiment of this application further provides a communication apparatus, configured to implement a function of the network device or the relay device in the foregoing method. For example, the apparatus may be a software module or a chip system. In this embodiment of this application, the chip system may include a chip, or may include a chip and another discrete component. The communication apparatus 1600 may include a processing unit 1601 and a communication unit 1602.

In this embodiment of this application, the communication unit may also be referred to as a transceiver unit, and may include a sending unit and/or a receiving unit, which are respectively configured to perform sending and receiving steps of the network device or the relay device in the foregoing method embodiments.

The communication apparatus provided in this embodiment of this application is described below in detail with reference to FIG. 16 and FIG. 17. It should be understood that descriptions of apparatus embodiments correspond to the descriptions of the method embodiments. Therefore, for content that is not described in detail, refer to the method embodiments. For brevity, details are not described herein again.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit 1602 and that is configured to implement a receiving function may be considered as a receiving unit, and a component that is in the communication unit 1602 and that is configured to implement a sending function may be considered as a sending unit. In other words, the communication unit 1602 includes the receiving unit and the sending unit. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

In an implementation, the processing unit is configured to determine multiple pieces of measurement information based on multiple first signals, where each of the multiple pieces of measurement information corresponds to one of the multiple first signals.

The communication unit is configured to: send the multiple pieces of measurement information to a first network device, and receive forwarding power information from the first network device, where the forwarding power information is determined based on one or more pieces of measurement information, and the forwarding power information is used by the relay device to forward a signal from a network device or a terminal device.

In an implementation, the communication unit is configured to receive multiple pieces of measurement information from a relay device, where each of the multiple pieces of measurement information corresponds to one of multiple first signals.

The processing unit is configured to determine forwarding power information based on the multiple pieces of measurement information, where the forwarding power information is determined based on the multiple pieces of measurement information, and the forwarding power information is used by the relay device to forward a signal from a network device or a terminal device.

The communication unit is configured to send the forwarding power information to the relay device.

In an implementation, the communication unit is configured to receive multiple first signals.

The processing unit is configured to: determine multiple pieces of measurement information based on multiple first signals, where each of the multiple pieces of measurement information corresponds to one of the multiple first signals, and one of the multiple first signals is from one of at least one network device; and determine forwarding power information based on the multiple pieces of measurement information, where the forwarding power information is determined based on one or more pieces of measurement information, and the forwarding power information is used by a relay device to forward a signal from a network device or a terminal device.

In an implementation, the processing unit is configured to determine K1 pieces of measurement information based on K1 first signals, where each of the K1 pieces of measurement information corresponds to one of the K1 first signals, and K1 is an integer greater than 0.

The communication unit is configured to: send the K1 pieces of measurement information to a first network device, and receive K2 pieces of first forwarding power information from the first network device, where each of the K2 pieces of first forwarding power information is determined based on one or more pieces of measurement information, and K2 is greater than or equal to K1.

In an implementation, the communication unit is configured to receive K1 pieces of measurement information from a relay device, where each of the K1 pieces of measurement information corresponds to one of K1 first signals, and K1 is an integer greater than 0.

The processing unit is configured to determine K2 pieces of first forwarding power information based on the K1 pieces of measurement information, where each of the K2 pieces of first forwarding power information is determined based on at least one piece of measurement information, K2 is greater than or equal to K1, and the first forwarding power information is used by the relay device to forward a signal to a terminal device.

The communication unit is configured to send the K2 pieces of first forwarding power information to the relay device.

The foregoing is merely an example. The processing unit 1601 and the communication unit 1602 may further perform other functions. For more detailed descriptions, refer to related descriptions in the embodiment shown in any one of FIG. 4 to FIG. 11. Details are not described herein again.

FIG. 17 is a diagram of a communication apparatus according to an embodiment of this application. The apparatus shown in FIG. 17 may be an implementation of a hardware circuit of the apparatus shown in FIG. 16. The communication apparatus is applicable to the foregoing flowcharts, and may perform the functions of the relay device or the network device in the foregoing method embodiments. For ease of description, FIG. 17 shows only main components of the communication apparatus.

As shown in FIG. 17, the communication apparatus 1700 includes a processor 1710 and an interface circuit 1720. The processor 1710 and the interface circuit 1720 are coupled to each other. It may be understood that the interface circuit 1720 may be an interface circuit, a pin, an interface circuit, or an input/output interface. Optionally, the communication apparatus 1700 may further include a memory 1730, configured to: store instructions to be executed by the processor 1710, store input data required by the processor 1710 to run instructions, or store data generated after the processor 1710 runs instructions.

When the communication apparatus 1700 is configured to implement the method shown in any one of FIG. 4 to FIG. 11, the processor 1710 is configured to implement the function of the processing unit 1601, and the interface circuit 1720 is configured to implement the function of the communication unit 1602.

When the communication apparatus is a chip used in a relay device, the relay device chip implements the functions of the relay device in the foregoing method embodiments. The relay device chip receives information from another module (for example, a radio frequency module or an antenna) in the relay device, where the information is sent by a network device to the relay device; or the relay device chip sends information to another module (for example, a radio frequency module or an antenna) in the relay device, where the information is sent by the relay device to a network device.

When the communication apparatus is a chip used in a network device, the network device chip implements the functions of the network device in the foregoing method embodiments. The network device chip receives information from another module (for example, a radio frequency module or an antenna) in the network device, where the information is sent by a relay device to the network device; or the network device chip sends information to another module (for example, a radio frequency module or an antenna) in the network device, where the information is sent by the network device to a relay device.

It may be understood that, the processor in embodiments of this application may be a central processing unit, or may be another general purpose processor, a digital signal processor, an application-specific integrated circuit or another programmable logic device, a transistor logic device, a hardware component, or any combination thereof. The general purpose processor may be a microprocessor or any regular processor or the like.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or any other form of a storage medium well-known in the art.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

    determining, by a relay device, multiple pieces of measurement information based on multiple first signals, wherein each of the multiple pieces of measurement information corresponds to one first signal; and
    sending, by the relay device, the multiple pieces of measurement information to a first network device, and receiving forwarding power information from the first network device, wherein the forwarding power information is determined based on the multiple pieces of measurement information, and the forwarding power information is used by the relay device to forward a signal from a network device or a terminal device.

2. The method according to claim 1, wherein the method further comprises:

    receiving, by the relay device, a second signal from the first network device, and forwarding the second signal to a terminal device based on the forwarding power information, wherein
    there is an association relationship between the forwarding power information and at least one of the following: a transmission direction used by the relay device to receive the second signal, a transmission direction used by the relay device to forward the second signal, or a transmission direction used by the first network device to send the second signal.

3. The method according to claim 2, wherein the method further comprises:

    receiving, by the relay device, a third signal from a second network device, and forwarding the third signal to a terminal device based on the forwarding power information, wherein
    there is an association relationship between the forwarding power information and at least one of the following: the transmission direction used by the relay device to receive the second signal; the transmission direction used by the relay device to forward the second signal; the transmission direction used by the first network device to send the second signal; a transmission direction used by the relay device to receive the third signal; a transmission direction used by the relay device to forward the third signal; or a transmission direction used by the second network device to send the third signal.

4. The method according to any one of claims 1 to 3, wherein for each of the multiple first signals, measurement information corresponding to the first signal is a receive power of the first signal; and

an $i^{th}$ first signal in the multiple first signals corresponds to the forwarding power information, and the forwarding power information satisfies any one of the following forms:

$$P_{Txi} = P_{Rxi} + Gi;$$

$$P_{Txi} = P_{Rxi} + Gi + 10\,log_{10}\,W;$$

or

$$P_{Txi} = P_{Rxi} + Gi + 10\,log_{10}\,W + 10\,log_{10}\,Por,$$

wherein
$P_{Txi}$ represents a preconfigured forwarding power of the $i^{th}$ first signal, $P_{Rxi}$ represents a receive power of the $i^{th}$ first signal, Gi represents the forwarding power information corresponding to the $i^{th}$ first signal, W represents a bandwidth corresponding to the $i^{th}$ first signal, and Por represents a quantity of ports corresponding to the $i^{th}$ first signal.

5. The method according to any one of claims 1 to 3, wherein for each of the multiple first signals, measurement information corresponding to the first signal is a path loss of the first signal; and

an $i^{th}$ first signal in the multiple first signals corresponds to the forwarding power information, and the forwarding power information satisfies the following form:

$$Gi = P_{0i} + PLi - P_{Rxi},$$

wherein
$P_{0i}$ represents a preconfigured target receive power of the $i^{th}$ first signal, $P_{Rxi}$ represents a receive power of the $i^{th}$ first signal, Gi represents the forwarding power information corresponding to the $i^{th}$ first signal, and PLi represents a path loss of the $i^{th}$ first signal.

6. The method according to claim 2, wherein the method further comprises:

receiving, by the relay device, first information from the first network device, wherein the first information indicates a power offset value; and
the forwarding, by the relay device, the second signal to a terminal device based on the forwarding power information comprises:
forwarding, by the relay device, the second signal to the terminal device based on the forwarding power information and the power offset value.

7. A communication method, comprising:

receiving, by a first network device, multiple pieces of measurement information from a relay device, wherein each of the multiple pieces of measurement information corresponds to one of multiple first signals;
determining, by the first network device, forwarding power information based on the multiple pieces of measurement information, wherein the forwarding power information is used by the relay device to forward a signal from a network device or a terminal device; and
sending, by the first network device, the forwarding power information to the relay device.

8. The method according to claim 7, wherein for each of the multiple first signals, measurement information corresponding to the first signal is a receive power of the first signal; and

an $i^{th}$ first signal in the multiple first signals corresponds to the forwarding power information, and the forwarding power information satisfies any one of the following forms:

$$P_{Txi} = P_{Rxi} + Gi;$$

$$P_{Txi} = P_{Rxi} + Gi + 10\,log_{10}\,W;$$

or

$$P_{Txi} = P_{Rxi} + Gi + 10\,log_{10}\,W + 10\,log_{10}\,Por,$$

wherein
$P_{Txi}$ represents a preconfigured forwarding power of the $i^{th}$ first signal, $P_{Rxi}$ represents a receive power of the $i^{th}$ first signal, Gi represents the forwarding power information corresponding to the $i^{th}$ first signal, W represents a bandwidth corresponding to the $i^{th}$ first signal, and Por represents a quantity of ports corresponding to the $i^{th}$ first signal.

9. The method according to claim 7, wherein for each of the multiple first signals, measurement information corresponding to the first signal is a path loss of the first signal; and

an $i^{th}$ first signal in the multiple first signals corresponds to the forwarding power information, and the forwarding power information satisfies the following form:

$$Gi = P_{0i} + PLi - P_{Rxi},$$

wherein
$P_{0i}$ represents a preconfigured target receive power of the $i^{th}$ first signal, $P_{Rxi}$ represents a receive power of the $i^{th}$ first signal, Gi represents the forwarding power information corresponding to the $i^{th}$ first signal, and PLi represents a path loss of the $i^{th}$ first signal.

10. The method according to any one of claims 7 to 9, wherein the method further comprises:

sending, by the first network device, first information to the relay device, wherein the first information indicates a power offset value corresponding to the forwarding power information.

11. A communication method, comprising:

determining, by a relay device, multiple pieces of measurement information based on multiple first signals, wherein each of the multiple pieces of measurement information corresponds to one of the multiple first signals, and one of the multiple first signals is from one of at least one network device; and
determining, by the relay device, forwarding power information based on the multiple pieces of measurement information, wherein the forwarding power information is determined based on the multiple pieces of measurement information, and the forwarding power information is used by the relay device to forward a signal from a network device or a terminal device.

12. The method according to claim 11, wherein the method further comprises:
receiving, by the relay device, a second signal from the network device, and forwarding the second signal to a terminal device based on the forwarding power information.

13. The method according to claim 12, wherein there is an association relationship between the forwarding power information and at least one of the following: a transmission direction used by the relay device to receive the second signal, a transmission direction used by the relay device to forward the second signal, or a transmission direction used by the first network device to send the second signal.

**14.** The method according to claim 12, wherein the method further comprises:

receiving, by the relay device, first information from the network device, wherein the first information indicates a power offset value; and

the forwarding the second signal to a terminal device based on the forwarding power information comprises: forwarding, by the relay device, the second signal to the terminal device based on the forwarding power information and the power offset value.

**15.** The method according to any one of claims 11 to 14, wherein for each of the multiple first signals, measurement information corresponding to the first signal is a receive power of the first signal; and

an $i^{th}$ first signal in the multiple first signals corresponds to the forwarding power information, and the forwarding power information satisfies any one of the following forms:

$$P_{Txi} = P_{Rxi} + Gi;$$

$$P_{Txi} = P_{Rxi} + Gi + 10\,log_{10}\,W;$$

or

$$P_{Txi} = P_{Rxi} + Gi + 10\,log_{10}\,W + 10\,log_{10}\,Por,$$

wherein

$P_{Txi}$ represents a preconfigured forwarding power of the $i^{th}$ first signal, $P_{Rxi}$ represents a receive power of the $i^{th}$ first signal, Gi represents the forwarding power information corresponding to the $i^{th}$ first signal, W represents a bandwidth corresponding to the $i^{th}$ first signal, and Por represents a quantity of ports corresponding to the $i^{th}$ first signal.

**16.** The method according to any one of claims 11 to 15, wherein for each of the multiple first signals, measurement information corresponding to the first signal is a path loss of the first signal; and

an $i^{th}$ first signal in the multiple first signals corresponds to the forwarding power information, and the forwarding power information satisfies the following form:

$$Gi = P_{0i} + PLi - P_{Rxi},$$

wherein

$P_{0i}$ represents a preconfigured target receive power of the $i^{th}$ first signal, $P_{Rxi}$ represents a receive power of the $i^{th}$ first signal, Gi represents the forwarding power information corresponding to the $i^{th}$ first signal, and PLi represents a path loss of the $i^{th}$ first signal.

**17.** A communication apparatus, comprising:

a processing unit, configured to determine multiple pieces of measurement information based on multiple first signals, wherein each of the multiple pieces of measurement information corresponds to one of the multiple first signals; and

a communication unit, configured to: send the multiple pieces of measurement information to a first network device, and receive forwarding power information from the first network device, wherein the forwarding power information is determined based on the multiple pieces of measurement information, and the forwarding power information is used by the relay device to forward a signal from a network device or a terminal device.

**18.** A communication apparatus, comprising:

a communication unit, configured to receive multiple pieces of measurement information from a relay device, wherein each of the multiple pieces of measurement information corresponds to one of multiple first signals; and

a processing unit, configured to determine forwarding power information based on the multiple pieces of measurement information, wherein the forwarding power information is determined based on the multiple pieces of measurement information, and the forwarding power information is used by the relay device to forward a signal from a network device or a terminal device, wherein

the communication unit is configured to send the forwarding power information to the relay device.

19. A communication apparatus, comprising:

a communication unit, configured to receive multiple first signals; and

a processing unit, configured to: determine multiple pieces of measurement information based on multiple first signals, wherein each of the multiple pieces of measurement information corresponds to one of the multiple first signals, and one of the multiple first signals is from one of at least one network device; and determine forwarding power information based on the multiple pieces of measurement information, wherein the forwarding power information is determined based on the multiple pieces of measurement information, and the forwarding power information is used by a relay device to forward a signal from a network device or a terminal device.

20. A communication apparatus, comprising a processor, wherein the processor is configured to execute a computer program or instructions in a memory, to enable the communication apparatus to implement the method according to any one of claims 1 to 16.

21. A computer-readable storage medium, storing a computer program or instructions, and when the computer program or the instructions are run on a computer, the computer is enabled to implement the method according to any one of claims 1 to 16.

22. A communication system, comprising a relay device configured to perform the method according to any one of claims 1 to 6, and a network device configured to perform the method according to any one of claims 7 to 10.

First network device

Second network device

TRP1

TRP2

Terminal device

FIG. 1

FIG. 2

FIG. 3(a)

FIG. 3(b)

| Terminal device | Relay device | Network device |
|---|---|---|

S401: First signal

S402: The relay device measures the first signal, to obtain measurement information

S403: Measurement information

S404: First forwarding power information

S406: The relay device forwards the second signal to the terminal device based on the first forwarding power information

S405: Second signal

Second signal

S407: Fourth signal

S408: The relay device forwards the fourth signal to the network device based on the first forwarding power information

Fourth signal

FIG. 4

| Network device | First signal | First signal | ... | ... | First signal |
|---|---|---|---|---|---|
| Relay device | Beam 1_1 | Beam 2_1 | ... | ... | Beam X1_1 |

FIG. 5

| Network device | Beam 1_2: X first signals | Beam 2_2: X first signals | ... | Beam X2_2: X first signals |
|---|---|---|---|---|

| Relay device | Beam 1_1 | Beam 2_1 | ... | Beam X1_1 |
|---|---|---|---|---|

FIG. 6

```
Terminal                    Relay                      Network
 device                     device                      device

                          S701: First signal
                    ◄─────────────────────────────────────

          ┌─────────────────────────────────────┐
          │  S702: The relay device              │
          │  measures the first signal, to       │
          │  obtain measurement                  │
          │  information                         │
          └─────────────────────────────────────┘

          ┌─────────────────────────────────────┐
          │  S703: The relay device              │
          │  determines first forwarding         │
          │  power information based on          │
          │  the measurement information         │
          └─────────────────────────────────────┘

          ┌─────────────────────────────────────┐     S704: Second
   Second │  S705: The relay device             │         signal
   signal │  forwards the second signal to      │   ◄──────────────
  ◄───────│  the terminal device based on       │
          │  the first forwarding power         │
          │  information                        │
          └─────────────────────────────────────┘

 S706: Fourth │ S707: The relay device          │
    signal    │ forwards the fourth signal to   │   Fourth signal
  ──────────► │ the network device based on     │   ──────────►
              │ the first forwarding power      │
              │ information                     │
              └─────────────────────────────────┘
```

FIG. 7

```
┌──────────┐          ┌──────────┐          ┌──────────┐
│ Terminal │          │  Relay   │          │ Network  │
│  device  │          │  device  │          │  device  │
└──────────┘          └──────────┘          └──────────┘
     │                      │                      │
     │  S801: First signal  │                      │
     ├─────────────────────▶│                      │
     │              ┌───────────────────┐          │
     │              │ S802: The relay   │          │
     │              │ device measures   │          │
     │              │ the first signal, │          │
     │              │ to obtain         │          │
     │              │ measurement       │          │
     │              │ information       │          │
     │              └───────────────────┘          │
     │                      │ S803: Measurement    │
     │                      │    information       │
     │                      ├─────────────────────▶│
     │                      │  S804: First         │
     │                      │  forwarding power    │
     │                      │  information         │
     │                      │◀─────────────────────┤
     │                      │                      │
```

FIG. 8

```
              ┌──────────┐          ┌──────────┐
              │  Relay   │          │ Network  │
              │  device  │          │  device  │
              └──────────┘          └──────────┘
                   │                      │
                   │  S901: First signal  │
                   ├─────────────────────▶│
                   │          ┌───────────────────────┐
                   │          │ S902: The network     │
                   │          │ device measures the   │
                   │          │ first signal, to      │
                   │          │ obtain measurement    │
                   │          │ information           │
                   │          └───────────────────────┘
                   │          ┌───────────────────────┐
                   │          │ S903: The network     │
                   │          │ device determines     │
                   │          │ first forwarding      │
                   │          │ power information     │
                   │          │ based on the          │
                   │          │ measurement           │
                   │          │ information, and      │
                   │          │ sends the first       │
                   │          │ forwarding power      │
                   │          │ information to the    │
                   │          │ relay device          │
                   │          └───────────────────────┘
                   │  First forwarding    │
                   │  power information   │
                   │◀─────────────────────┤
                   │                      │
```

FIG. 9

```
┌──────────────┐                    ┌──────────────┐
│ Relay device │                    │   Terminal   │
│              │                    │   device     │
└──────┬───────┘                    └──────┬───────┘
       │    S1001: First signal            │
       │ ─────────────────────────────────▶│
       │          ┌────────────────────────┴──────┐
       │          │ S1002: The terminal device    │
       │          │ measures the first signal, to │
       │          │ obtain measurement            │
       │          │ information                   │
       │          └────────────────────────┬──────┘
       │          ┌────────────────────────┴──────┐
       │          │ S1003: The terminal device    │
       │          │ determines first forwarding   │
       │          │ power information based on     │
       │          │ the measurement information,  │
       │          │ and sends the first forwarding│
       │          │ power information to the      │
       │          │ relay device                  │
       │          └────────────────────────┬──────┘
       │   First forwarding                │
       │   power information               │
       │ ◀─────────────────────────────────│
       │                                   │
```

FIG. 10

At least one
network device

Second
network device

...

First network
device

Terminal device

Relay device

K1 first signals

S1101: The relay device
determines K1 pieces of
measurement information based
on the K1 first signals

S1102: K1 pieces of
measurement information

S1103: K2 pieces of first
forwarding power information

Second signal

S1104: The relay device receives
the second signal from the first
network device, and forwards
the second signal to the terminal
device based on second
forwarding power information

Second signal

Third signal

S1105: The relay device receives
the third signal from the second
network device, and forwards
the third signal to the terminal
device based on third forwarding
power information

Third signal

Fourth signal

S1106: The relay device receives
the fourth signal from the
terminal device, and forwards
the fourth signal to the first
network device based on fourth
forwarding power information

Fourth signal

FIG. 11

FIG. 12

FIG. 13

| | Carrier 0 | | | | Carrier 1 | | | | | | |
|---|---|---|---|---|---|---|---|---|---|---|---|
| Network device | RS(0, 0) | RS(0, 1) | ... | RS(0, X–1) | RS(1, 0) | RS(1, 1) | ... | RS(1, X–1) | Carrier 0 | Carrier 1 | Carrier 0 and carrier 1 |

Second signal   Second signal   Second signal

| Relay device | Beam#0 | Beam#1 | ... | Beam#(X–1) | Beam#0 | Beam#1 | ... | Beam#(X–1) | Beam#0 | Beam#1 | Beam#0 |
|---|---|---|---|---|---|---|---|---|---|---|---|

FIG. 14

| | Carrier 0 | | | Carrier 1 | | | | | |
|---|---|---|---|---|---|---|---|---|---|
| | Beam#A | Beam#A | | Beam#A | Beam#B | Beam#B | | Beam#B | Beam#A | Beam#A and beam#B |
| Network device | RS(0, 0) | RS(0, 1) | ... | RS(0, X–1) | RS(1, 0) | RS(1, 1) | ... | RS(1, X–1) | Carrier 0 | Carrier 0 and carrier 1 |
| | | | | | | | | Second signal | Second signal | |
| Relay device | Beam#0 | Beam#1 | ... | Beam#(X–1) | Beam#0 | Beam#1 | ... | Beam#(X–1) | Beam#0 | Beam#0 |

FIG. 15

EP 4 546 892 A1

Communication apparatus 1600

Processing unit 1601

Communication unit 1602

FIG. 16

Communication apparatus 1700

Processor 1710

Interface circuit 1720

Memory 1730

FIG. 17

## INTERNATIONAL SEARCH REPORT

| | |
|---|---|
| International application No. | |
| | **PCT/CN2023/103489** |

**A.    CLASSIFICATION OF SUBJECT MATTER**

H04W 52/18(2009.01)i

According to International Patent Classification (IPC) or to both national classification and IPC

**B.    FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 测量, 功率, 中继, 转发, 路损, 损耗, measure, power, relay, forward, loss

**C.    DOCUMENTS CONSIDERED TO BE RELEVANT**

| Category* | Citation of document, with indication, where appropriate, of the relevant passages | Relevant to claim No. |
|---|---|---|
| X | CN 102811469 A (ZTE CORP.) 05 December 2012 (2012-12-05) <br> description, paragraphs 43-100, and figures 1-6 | 1-22 |
| A | CN 101527587 A (DATANG MOBILE COMMUNICATIONS EQUIPMENT CO., LTD.) 09 September 2009 (2009-09-09) <br> entire document | 1-22 |
| A | CN 103327593 A (CHINA MOBILE COMMUNICATIONS GROUP CORP.) 25 September 2013 (2013-09-25) <br> entire document | 1-22 |
| A | CN 114514781 A (BEIJING XIAOMI MOBILE SOFTWARE CO., LTD.) 17 May 2022 (2022-05-17) <br> entire document | 1-22 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 September 2023** | **15 September 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103489**

| Patent document cited in search report | | | Publication date (day/month/year) | Patent family member(s) | | | Publication date (day/month/year) |
|---|---|---|---|---|---|---|---|
| CN | 102811469 | A | 05 December 2012 | WO | 2013185690 | A1 | 19 December 2013 |
| CN | 101527587 | A | 09 September 2009 | None | | | |
| CN | 103327593 | A | 25 September 2013 | None | | | |
| CN | 114514781 | A | 17 May 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210910193